(19) Europäisches Patentamt
European Patent Office
Office européen des brevets

(11) **EP 2 763 228 A1**

(12) **EUROPEAN PATENT APPLICATION**
published in accordance with Art. 153(4) EPC

(43) Date of publication:
06.08.2014 Bulletin 2014/32

(51) Int Cl.:
*H01M 8/04* *(2006.01)*　　*H01M 8/02* *(2006.01)*
*H01M 8/06* *(2006.01)*　　*H01M 8/12* *(2006.01)*
*H01M 8/24* *(2006.01)*

(21) Application number: 12836292.8

(22) Date of filing: 13.09.2012

(86) International application number:
PCT/JP2012/005844

(87) International publication number:
WO 2013/046582 (04.04.2013 Gazette 2013/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 27.09.2011 JP 2011211254

(71) Applicant: Panasonic Corporation
Osaka 571-8501 (JP)

(72) Inventor: KOBAYASHI, Susumu
Chuo-ku,
Osaka 540-6207 (JP)

(74) Representative: Grünecker, Kinkeldey,
Stockmair & Schwanhäusser
Leopoldstrasse 4
80802 München (DE)

(54) **HIGH-TEMPERATURE OPERATION FUEL CELL MODULE AND HIGH-TEMPERATURE OPERATION FUEL CELL SYSTEM**

(57)　A SOFC module (100) includes a SOFC (20) including a power generation section for generating electric power through a power generation reaction by utilizing a fuel gas and air; and a reformer (40) for generating a reformed gas as the fuel gas, by using a fluid supplied to the reformer, the reformed gas being generated from the fluid. The fluid heated by heat owned by the SOFC (20) is supplied to the reformer (40).

Fig. 1

## Description

### Technical Field

The present invention relates to a cooling structure of a solid oxide fuel cell (SOFC).

### Background Art

In recent years, development of high-efficient and clean energy sources has been demanded. As one of candidates of the high-efficient and clean energy sources, fuel cells have attracted attention. Among the fuel cells, a solid oxide fuel cell (SOFC) has a higher power generation efficiency than other kind of fuel cells such as a polymer electrolyte fuel cell or a phosphorous acid fuel cell, and therefore has attracted attention as a next-generation fuel cell.

The SOFC generates electric power and heat simultaneously through an electrochemical reaction (power generation reaction) between a fuel gas containing hydrogen and an oxidizing gas such as air containing oxygen. The SOFC generates a fuel gas (reformed gas) containing hydrogen as a major component, through a steam reforming method which performs a reforming reaction using a raw material gas and water.

The SOFC has a higher power generation efficiency as described above, but is higher in operating temperature (e.g., 750 degrees C to 1000 degrees C). To maintain power generation, it is necessary to cool the SOFC by a method adapted to the high-temperature SOFC.

To this end, conventionally, air guided to inside of a SOFC hot module as an oxidizing gas is used as a cooling medium for cooling the SOFC (e.g., Patent Literatures 2 and 3). Especially, the method disclosed in Patent Literature 2 includes the following steps and increases an oxygen utilization efficiency (Uo) by increasing a cooling efficiency. More specifically, the method disclosed in Patent Literature 2 includes the step of receiving in a temperature equilibration member, heat generated in conversion between a chemical energy and an electric energy, from a fuel cell, the step of performing pre-heating by diffusing the heat of the temperature equilibration member to an air flow via a heat exchange element, the step of directly diffusing the heat of the temperature equilibration member to the air flow to raise a temperature of the air up to a temperature near a reaction temperature, and the step of flowing the heated air flow to a cathode.

Also, there is disclosed a fuel cell which utilizes heat energy owned by air which has deprived heat from the SOFC by cooling the SOFC as an energy for pre-heating a fuel gas or an oxidizing gas (e.g., Patent Literatures 1 and 5). Also, there is proposed a solid oxide fuel cell module which lessens an influence on heat from a preheating section for preheating the fuel gas or the oxidizing gas, a reforming section which performs a reforming reaction to suppress a temperature distribution between cells, etc. (Patent Literature 4).

### Citation List

### Patent Literature

Patent Literature 1: Japanese Laid-Open Patent Application Publication No. 2004-139960
Patent Literature 2: Japanese Patent Publication No. 3098813
Patent Literature 3: Japanese Laid-Open Patent Application Publication No. 2006-85982
Patent Literature 4: Japanese Laid-Open Patent Application Publication No. 2009-93923
Patent Literature 5: Japanese Laid-Open Patent Application Publication No. 2002-280023

### Summary of the Invention

### Technical Problem

However, in the above stated prior arts, there is a problem that the oxygen utilization efficiency of the air supplied to the SOFC hot module cannot be improved efficiently. In particular, there is a problem that the oxygen utilization efficiency of the air cannot be improved to an extent that water can be supplied in a self-sustainable manner within the SOFC system.

Therefore, it is necessary to increase a value of the Uo to an extent that the water can be supplied in a self-sustainable manner by the air with an outside air temperature in the system.

However, the above stated prior arts disclosed in Patent Literatures 1 to 5 have problems that they do not have a configuration for improving the oxygen utilization efficiency of the air with a view to supplying the water easily in a self-sustainable manner especially within the SOFC system.

The present invention has been made in view of the above stated problems, and an object is to provide a high-temperature operating fuel cell module capable of improving the oxygen utilization efficiency of the air supplied. In particular, an object is to provide a high-temperature operating fuel cell module and a high-temperature operating fuel cell system which are capable of improving the utilization efficiency of the air to an extent that the water can be supplied easily in a self-sustainable manner within the system.

**Solution to Problem**

according to an aspect of the present invention, a high-temperature operating fuel cell module comprises: a high-temperature operating fuel cell including a power generation section for generating electric power through a power generation reaction by utilizing a fuel gas and air; and a reformer for generating a reformed gas as the fuel gas, by using a fluid supplied to the reformer, the reformed gas being generated from the fluid; wherein the fluid heated by heat owned by the high-temperature operating fuel cell is supplied to the reformer.

**Advantageous Effects of the Invention**

A high-temperature operating fuel cell module of the present invention has an advantage that a utilization efficiency of supplied air can be improved. In addition, the water can be supplied easily in a self-sustainable manner within a high-temperature operating fuel cell system including the high-temperature operating fuel cell module of the present invention.

**Brief Description of the Drawings**

[Fig. 1] Fig. 1 is a view schematically showing an example of a configuration for providing heat of SOFC to fluids (raw material and reforming water) supplied to a reformer for preheating the fluids in a SOFC hot module according an embodiment of the present invention.

[Fig. 2] Fig. 2 is a view schematically showing an example of paths through which air, a raw material and reforming water flow in the SOFC hot module according the embodiment of the present invention.

[Fig. 3] Fig. 3 is a view schematically showing a configuration of the SOFC hot module according the embodiment of the present invention.

[Fig. 4] Fig. 4 is a view schematically showing an example of paths through which air and fluids (raw material and reforming water) flow in the SOFC hot module according the embodiment.

[Fig. 5] Fig. 5 is a view schematically showing an example of paths through which air and fluids (raw material and reforming water) flow in the SOFC hot module according the embodiment of the present invention.

[Fig. 6] Fig. 6 is a view schematically showing an example of paths through which air and fluids (raw material and reforming water) flow in the SOFC hot module according the embodiment of the present invention.

[Fig. 7] Fig. 7 is a front view showing an example of a specific configuration of the SOFC hot module according the embodiment of the present invention.

[Fig. 8] Fig. 8 is a side view showing an example of the specific configuration of the SOFC hot module according the embodiment of the present invention.

[Fig. 9] Fig. 9 is a view showing an example of a flow of the air flowing through the SOFC hot module according the embodiment of the present invention.

[Fig. 10] Fig. 10 is a view showing an example of a flow of the raw material flowing through the SOFC hot module according the embodiment of the present invention.

[Fig. 11] Fig. 11 is a view showing an example of an obverse surface, a side surface and a reverse surface of an outer end header constituting the SOFC hot module according the embodiment of the present invention,

[Fig. 12] Fig. 12 is a view showing an example of an obverse surface, a side surface and a reverse surface of a cathode end interconnector constituting the SOFC hot module according the embodiment of the present invention.

[Fig. 13] Fig. 13 is a view showing an example of an obverse surface, a side surface and a reverse surface of SOFC constituting the SOFC hot module according the embodiment of the present invention.

[Fig. 14] Fig. 14 is a view showing an example of an obverse surface, a side surface and a reverse surface of an interconnector constituting the SOFC hot module according the embodiment of the present invention.

[Fig. 15] Fig. 15 is a view showing an example of an obverse surface, a side surface and a reverse surface of an anode end interconnector constituting the SOFC hot module according the embodiment of the present invention.

[Fig. 16] Fig. 16 is a view showing an example of an obverse surface, a side surface and a reverse surface of a reformer connection header constituting the SOFC hot module according the embodiment of the present invention.

[Fig. 17] Fig. 17 is a view showing an example of an obverse surface, a side surface and a reverse surface of a reformer constituting the SOFC hot module according the embodiment of the present invention.

[Fig. 18] Fig. 18 is a view schematically showing an example of a configuration of a SOFC system according the embodiment of the present invention.

[Fig. 19] Fig. 19 is a view showing an example of supply and generation of substances in a reforming efficiency and a fuel/oxygen utilization efficiency, in a cell reaction in which water of 1 mol is generated from hydrogen of 1 mol and oxygen of 0.5 mol.

[Fig. 20] Fig. 20 is a view showing an example of supply and generation of substances in the reforming efficiency and the fuel/oxygen utilization efficiency, in the cell reaction in which water of 1 mol is generated from hydrogen of 1 mol and oxygen of 0.5 mol.

[Fig. 21] Fig. 21 is a view showing an example of supply and generation of substances in the reforming efficiency and the fuel/oxygen utilization efficiency, in the cell reaction in which water of 1 mol is generated from hydrogen of 1 mol and oxygen of 0.5 mol.

[Fig. 22] Fig. 22 is a block diagram schematically showing an example of a configuration of a SOFC hot module having a configuration which is a premise of the present invention.

[Fig. 23] Fig. 23 is an example of an outer shape of the SOFC hot module of Fig. 22.

[Fig. 24] Fig. 24 is a view showing an example of a cross-sectional shape of the outer shape of the SOFC hot module, which is taken along A-A of Fig. 23.

[Fig. 25] Fig. 25 is a cross-sectional view showing an example of a structure of a flatten tubular segmented-in-series type SOFC included in the SOFC hot module of Fig. 22.

## Description of the Embodiments

### (**Finding which is a basis of the present invention**)

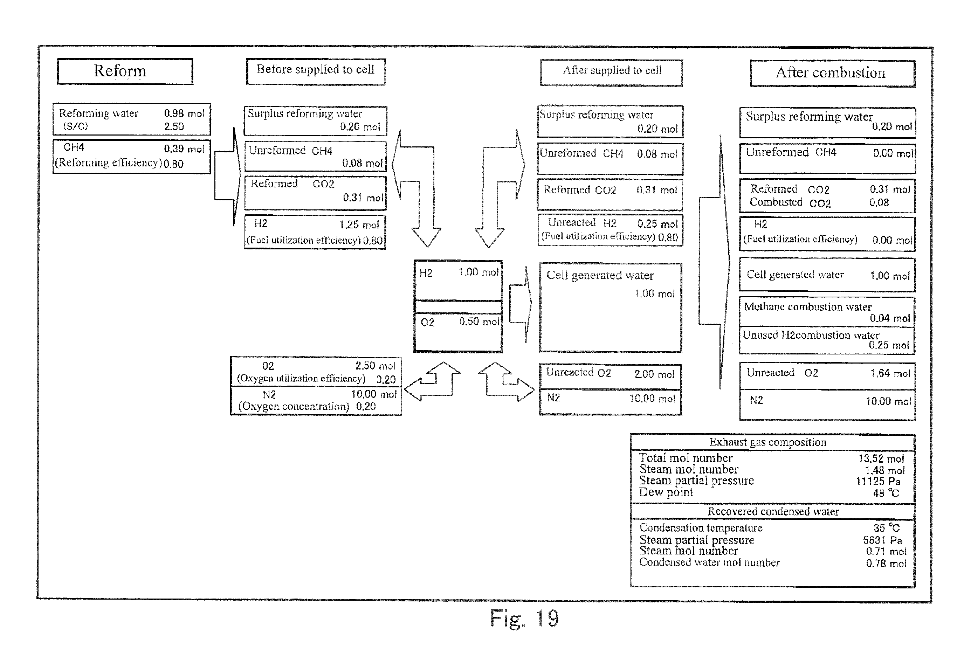

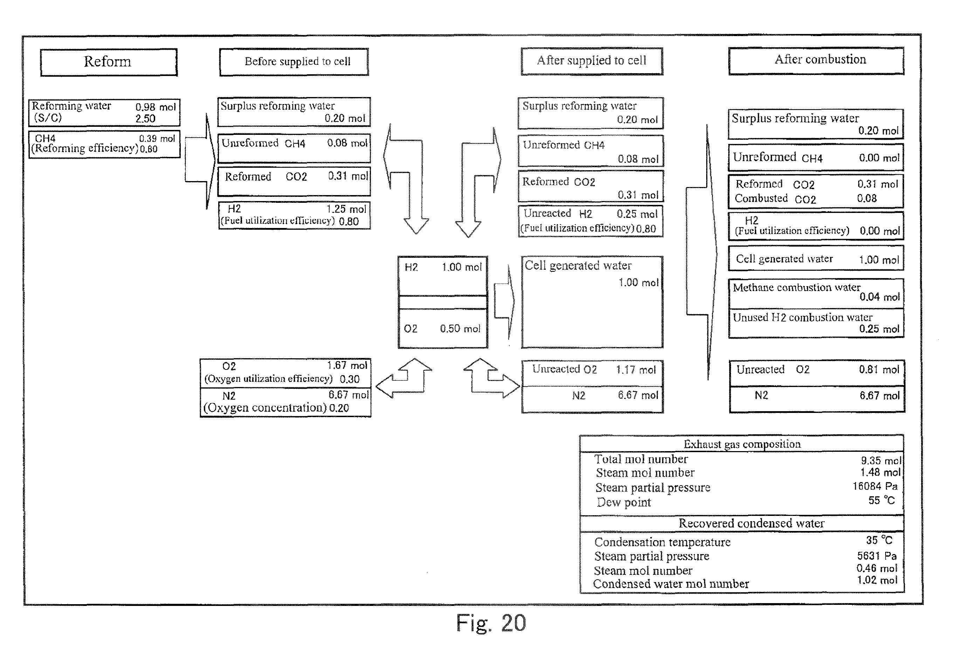

As finding which is a basis of the present invention, a relation between an oxygen utilization efficiency of air (oxidizing gas) supplied to a SOFC hot module and supplying of water within a SOFC system in a self-sustainable manner will be described with reference to Figs. 19 and 20. Figs. 19 and 20 are views each showing an example of supply and generation of substances in a reforming efficiency and a fuel/oxygen utilization efficiency, in a cell reaction in which water of 1 mol is generated from hydrogen of 1 mol and oxygen of 0.5 mol.

Supplying of water within the SOFC system in a self-sustainable manner is closely related to the air utilization efficiency and a cooling method of a fuel cell. A table of Fig. 19 shows supply and generation of substances corresponding to hydrogen consumption of 1 mol, when the reforming efficiency is 80%, the fuel utilization efficiency (Uf) is 80%, S/C = 2.5, and the oxygen utilization efficiency (Uo) is 0.2. A table of Fig. 20 shows supply and generation of substances corresponding to hydrogen consumption of I mol, when the reforming efficiency is 80%, the fuel utilization efficiency (Uf) is 80%, S/C = 2.5, and the oxygen utilization efficiency (Uo) is 0.3. The fuel utilization efficiency is a value satisfying a relation indicating the following formula (1), while the oxygen utilization efficiency is a value satisfying a relation indicating the following formula (2).

$$\text{Fuel utilization efficiency (Uf)} = (\text{Consumed hydrogen}) / (\text{Supplied hydrogen})$$

$$\dots (1)$$

$$\text{Oxygen utilization efficiency (Uo)} = (\text{Consumed oxygen}) / (\text{Supplied oxygen})$$

$$\dots (2)$$

As can be seen from the tables of Figs. 19 and 20, when the raw material is methane ($CH_4$) and S/C is 2.5, the reforming water of 0.98mol corresponding to consumed hydrogen of 1mol is necessary. If this reforming water can be recovered from water generated in the cell and water generated in combustion, and used as the reforming water again, it can be said that the water can be supplied in a self-sustainable manner within this system.

These generated water results from combustion of hydrogen contained in fuel. An absolute amount of the generated water depends on a fuel amount. Whether or not the generated water can be recovered efficiently depends greatly on the oxygen utilization efficiency (Uo).

For example, as shown in the table of Fig. 20, in a case where Uo is 0.3, a steam amount in a combustion gas discharged from the SOFC hot module is 1.48mol and a dew point is 55 degrees C. If the combustion gas is cooled to 35 degrees C which is an outside air temperature, condensed water of 1.02mol can be recovered, and the recovered condensed water can cover the reforming water of 0.98mol which is required for the reforming reaction.

By comparison, in a case where Uo is 0.2 in the table of Fig. 19, the combustion gas is diluted by the air. The steam amount in the combustion gas remains 1.48mol, but the dew point decreases to 48 degrees C unlike the case where Uo is 0.3. For this reason, even if the combustion gas is cooled to 35 degrees which is the outside air temperature, only the condensed water of 0.78mol can be recovered, and the recovered condensed water cannot cover the reforming water of 0.98mol which is required for the reforming reaction.

To air-cool the SOFC, the air of an amount which is five times (Uo = 0.2 in terms of the oxygen utilization efficiency) as much as an amount of air required in normal power generation of the SOFC in view of a heat capacity of the air, etc.. However, in the case where Uo is 0.2, in a condensation method which cools the combustion gas by the air of the outside air temperature of 35 degrees C, the condensed water of the amount required for the reforming reaction cannot be generated as described above. That is, the water cannot be supplied in a sustainable manner. The above stated findings apply to high-temperature operating fuel cells other than the SOFC. Based on the above stated findings, the present invention provides aspects described below.

According to a first aspect the present invention, a high-temperature operating fuel cell module comprises: a high-temperature operating fuel cell including a power generation section for generating electric power through a power generation reaction by utilizing a fuel gas and air; and a reformer for generating a reformed gas as the fuel gas, by using a fluid supplied to the reformer, the reformed gas being generated from the fluid; wherein the fluid heated by heat owned by the high-temperature operating fuel cell is supplied to the reformer.

The high-temperature operating fuel cell module is defined as a fuel cell operating at a temperature which is equal to or higher than about 400 degrees C. As the high-temperature operating fuel cell module, there are, for example, SOFC (solid oxide fuel cell) or MCFC (molten carbonate fuel cell). The fluid from which the reformed gas is generated refers to, for example, water and a raw material in the case of steam reforming, oxygen and a raw material in the case partial combustion method (partial oxidation method), and oxygen, water, and a raw material in the case of auto thermal reforming.

In the above configuration, the fluid supplied to the reformer deprives the heat owned by the high-temperature operating fuel cell, is heated and is supplied to the reformer. That is, the heat obtained from the high-temperature operating fuel cell can be converted into a vaporization energy required to generate, for example, a humidified raw material.

Therefore, the high-temperature operating fuel cell can be cooled efficiently by the supplied fluid, which can reduce an amount of the air for cooling the high-temperature operating fuel cell. Therefore, a utilization efficiency of the air can be increased. That is, the high-temperature operating fuel cell module of the present invention has an advantage that the utilization efficiency of the supplied air can be increased.

According to a second aspect of the present invention, the high-temperature operating fuel cell module according to the first aspect may comprise a first heat exchanger section which exchanges heat between the high-temperature operating fuel cell and the air such that the air cools the high-temperature operating fuel cell and is heated by the heat of the high-temperature operating fuel cell before the air is utilized in the power generation reaction; and a second heat exchanger section for exchanging heat between the fluid and the air heated by the heat exchange in the first heat exchanger section such that the air heats the fluid supplied to the reformer; wherein the fluid heated by the heat exchange in the second heat exchanger section is supplied to the reformer, while the air from which the heat has been deprived by the heat exchange in the second heat exchanger section, is supplied to the power generation section of the high-temperature operating fuel cell.

In the above configuration, the first heat exchanger section is able to deprive the heat from the high-temperature operating fuel cell by the supplied air to cool the fuel cell and heat the air. In addition, the second heat exchanger section is able to deprive the heat from the heated air to heat the fluid supplied to the reformer and cool the air. The cooled air can be supplied to the power generation section in the high-temperature operating fuel cell.

Therefore, the high-temperature operating fuel cell can be cooled efficiently plural times by the supplied air, and hence the utilization efficiency of the air can be increased. That is, the high-temperature operating fuel cell module has an advantage that the utilization efficiency of the supplied air can be increased.

Since the utilization efficiency of the supplied air can be increased, a supply amount of the air can be reduced as compared to a configuration in which the air is supplied excessively as an oxidizing agent used in the power generation reaction and cools the SOFC like the conventional configuration. Because of this, a dew point at which the condensed water of a required amount is obtained as the reforming water from the exhaust gas can be made higher than in the conventional configuration. As a result, the water can be supplied in a self-sustainable manner within a high-temperature operating fuel cell system including the high-temperature operating fuel cell module of the present invention.

According to a third aspect of the present invention, in the high-temperature operating fuel cell module according to the second aspect, the reformed gas generated by the reformer may be utilized as the fuel gas in the power generation section of the high-temperature operating fuel cell and as a cooling medium for cooling the high-temperature operating fuel cell.

In the above configuration, since the reformed gas utilized as the fuel gas can be utilized as the cooling medium of the high-temperature operating fuel cell, the high-temperature operating fuel cell can be cooled efficiently. Thus, since the supply amount of the air can be reduced, a dew point at which the condensed water of a required amount is obtained as the reforming water from the exhaust gas can be made higher than in the conventional configuration. As a result, the water can be supplied in a self-sustainable manner within a high-temperature operating fuel cell system including the high-temperature operating fuel cell module of the present invention.

According to a fourth aspect of the present invention, the high-temperature operating fuel cell module according to a second or third aspect, may further comprise a third heat exchanger section for exchanging heat between the air, from which the heat has been deprived by the heat exchange in the second heat exchanger section, and the high-temperature operating fuel cell such that the high-temperature operating fuel cell is cooled by the air; and a fourth heat exchanger section for exchanging heat between the air heated by the heat exchange in the third heat exchanger section and the fluid; wherein the fluid heated by the heat exchange in the second heat exchanger section and in the fourth heat exchanger section is supplied to the reformer, and the air, from which the heat has been deprived by the heat exchange in the fourth heat exchanger section is supplied to the power generation section of the high-temperature operating fuel cell to be utilized as an oxidizing agent and as a cooling medium for cooling the high-temperature operating fuel cell.

According to a fifth aspect of the present invention, the high-temperature operating fuel cell module according to the fourth aspect, may further comprise a fifth heat exchanger section for exchanging heat between the fluid heated by the heat exchange in the second heat exchanger section and in the fourth heat exchanger section, and the high-temperature operating fuel cell such that the fluid is heated and the high-temperature operating fuel cell is cooled, before the fluid heated by the heat exchange in the second heat exchanger section and in the fourth heat exchanger section is supplied to the reformer.

In the above configuration, the fifth heat exchanger section is able to exchange heat between the fluid and the high-temperature operating fuel cell. Although the fluid which exchanges heat with the high-temperature operating fuel cell has already been heated by the heat exchange with the air in the second heat exchanger section and in the fourth heat exchanger section, the temperature of the fluid is sufficiently low as compared to a heat generation temperature in the high-temperature operating fuel cell. Therefore, by the heat exchange in the fifth heat exchanger section, the fluid can deprive heat from the high-temperature operating fuel cell to cool the high-temperature operating fuel cell, while the fluid is further heated by the heat deprived from the high-temperature operating fuel cell, and the heated fluid is supplied to the reformer.

The fact that the heat generated in the high-temperature operating fuel cell is supplied to the fluid is equivalent to the fact the heat is supplied to the reformer supplied with the fluid. That is, by supplying the heat generated in the high-temperature operating fuel cell to the fluid, the heat generated in the high-temperature operating fuel cell can be converted into a reforming energy.

Since the high-temperature operating fuel cell module according to the fifth aspect is able to cool the high-temperature operating fuel cell by converting the heat owned by the high-temperature operating fuel cell into a reforming energy, the supply amount of the air can be reduced, and as a result, the utilization efficiency of the air can be increased.

According to a sixth aspect of the present invention, the high-temperature operating fuel cell module according to the fifth aspect, may further comprise a stacked flat plate type cell stack including a plurality of high-temperature operating fuel cells and a plurality interconnectors which are stacked together such that the plurality of high-temperature operating fuel cells and the plurality interconnectors are arranged alternately; a raw material supply layer placed at one end portion of the stacked flat plate type cell stack to supply the fluid to the stacked flat plate type cell stack; and a reformer connection layer placed at the other end portion of the stacked flat plate type cell stack and between the stacked flat plate type cell stack and the reformer to connect the stacked flat plate type cell stack and the reformer to each other; wherein the raw material supply layer may include the second heat exchanger section and the fourth heat exchanger section and generates a humidified raw material by the heat exchange between the air and the fluid in the second heat exchanger section and in the fourth heat exchanger section; and wherein the reformer connection layer may supply the air to the stacked flat plate type cell stack and supplies the humidified raw material generated in the raw material supply layer to the reformer.

According to a seventh aspect of the present invention, in the high-temperature operating fuel cell module according to the sixth aspect, the stacked flat plate type cell stack may have on an outer peripheral portion a first air passage through which the air flows, as the first heat exchanger section which exchanges heat between the supplied air and the high-temperature operating fuel cell.

According to an eighth aspect of the present invention, in the high-temperature operating fuel cell module according to the sixth or seventh aspect, the stacked flat plate type cell stack may have on an outer peripheral portion a second air passage through which the air flows, as a third heat exchanger section for exchanging heat between the air, from which the heat has been deprived by the heat exchange in the second heat exchanger section, and the high-temperature operating fuel cell.

According to a ninth aspect of the present invention, in the high-temperature operating fuel cell module according to one of the sixth to eighth aspects, the stacked flat plate type cell stack may have on an outer peripheral portion a raw material passage through which the fluid flows, as a fifth heat exchanger section for exchanging heat between the fluid heated by the heat exchange in the second heat exchanger section and in the fourth heat exchanger section, and the high-temperature operating fuel cell.

According to a tenth aspect of the present invention, in the high-temperature operating fuel cell module according to one of the sixth to ninth aspects, the stacked flat plate type cell stack may include an exhaust pipe which guides a combustion exhaust gas resulting from a power generation reaction in the power generation section to the reformer; and the reformer may utilize combustion heat generated by combustion of the combustion exhaust gas guided through the exhaust pipe, in a reforming reaction.

In the above configuration, the high-temperature operating fuel cell module is configured such that the reformer performs a reforming reaction by utilizing the combustion heat generated by combusting the combustion exhaust gas exhausted as a result of the power generation reaction in the power generation section of the high-temperature operating fuel cell.

The combustion exhaust gas exhausted as a result of the power generation reaction includes unused fuel and air (oxidizing agent) in the high-temperature operating fuel cell, and is a gas having the heat generated in the power generation reaction.

In the above configuration, the reformer performs the reforming reaction by utilizing the combustion heat generated by combusting the combustion exhaust gas. A portion of the combustion heat can be covered by the heat of the combustion exhaust gas which is generated in the power generation reaction. Therefore, the heat generated in the power generation reaction of the high-temperature operating fuel cell can be supplied to the reformer via the combustion exhaust gas.

As described above, since the heat generated in the high-temperature operating fuel cell can be utilized in the reforming reaction in the reformer, the utilization efficiency of the air can be increased.

According to an eleventh aspect of the present invention, in the high-temperature operating fuel cell module according to one of the sixth to tenth aspects, the high-temperature operating fuel cell may be a metal support high-temperature operating fuel cell in which an anode, an electrolyte, and a cathode are provided on a metal base plate as a support member; and therein the metal base plate of the high-temperature operating fuel cell may be provided with through-holes defining portions of the first air passage, the second air passage and the raw material passage, respectively, in the stacked flat plate type cell stack.

In accordance with the above configuration, since the high-temperature operating fuel cell uses the metal base plate as the support member, a heat conductivity can be improved as compared to a case where the base plate is made of ceramic like the conventional SOFC. This makes it possible to efficiently perform exchange between the heat of the air flowing through the first air passage and the second air passage and the heat of the raw material (humidified raw material) flowing through the raw material passage in the stacked flat plate type cell stack, and the heat generated in the high-temperature operating fuel cell.

The metal base plate is provided with the through-holes defining portions of the first air passage, the second air passage and the raw material passage, respectively. This metal base plate is easily finely processed, etc., as compared to the base plate made of ceramic. Therefore, the openings of the through-holes can have a complicated shape such as a comb shape having a plurality of projections. For example, when the openings have the comb shape, contact areas between the air flowing through the first air passage and the second air passage and the raw material flowing through the raw material passage, and the stacked flat plate type cell stack, can be increased. As a result, efficiency of the heat exchange can be further improved.

According to a twelfth aspect of the present invention, in the high-temperature operating fuel cell module according to the tenth or eleventh aspect, the reformer connection layer may includes: a humidified raw material supply hole as a through-hole through which a humidified raw material generated in the raw material supply layer is guided to the reformer; a reformed gas supply hole as a through-hole through which the reformed gas generated in the reformer is supplied to the power generation section in the stacked flat plate type cell stack; and a combustion exhaust gas supply hole as a through-hole through which the combustion exhaust gas guided from the power generation section in the stacked flat plate type cell stack through the exhaust pipe is supplied to the reformer; the reformer may include: a humidified raw material receiving hole as a through-hole which receives the humidified raw material supplied via the humidified raw material supply hole; a reformed gas exhaust hole as a through-hole through which the preformed gas is exhausted to the reformer connection layer; and a combustion section for combusting the combustion exhaust gas supplied via the combustion exhaust gas supply hole to obtain heat required for the reforming reaction.

In accordance with the above configuration, in a state in which the reformer connection layer and the reformer are stacked together and integrated, the gases (humidified raw material, reformed gas, and combustion exhaust gas) can be given and received, and heat can be given and received via joint surfaces of the reformer connection layer and the reformer.

According to a thirteenth aspect of the present invention, a high-temperature operating fuel cell module comprises a high-temperature operating fuel cell including a power generation section for generating electric power through a power generation reaction by utilizing a fuel gas and air; and a reformer for generating a reformed gas, by using a fluid supplied to the reformer, the reformed gas being generated from the fluid; wherein the high-temperature operating fuel cell module being configured in such a manner that the air is flowed through the high-temperature operating fuel cell such that the air cools the high-temperature operating fuel cell and is heated by heat of the high-temperature operating fuel cell before the air is utilized in the power generation section, the fluid supplied to the reformer is heated by heat exchange between the air heated while the air is flowed through the high-temperature operating fuel cell and the fluid, and then the air heated by the heat exchange is flowed to the high-temperature operating fuel cell such that a flow of the air is turned back to be utilized to cool the high-temperature operating fuel cell.

According to a fourteenth aspect of the present invention, a high-temperature operating fuel cell system comprises the high-temperature operating fuel cell modules according to the first or thirteenth aspect; and a condensation heat exchanger section for exchanging heat between the exhaust gas exhausted from the high-temperature operating fuel cell module and outside air to condense a moisture contained in the exhaust gas to generate condensed water; wherein the condensed water generated by the condensation heat exchanger section is supplied as reforming water to the high-temperature operating fuel cell module.

In accordance with the above configuration, the high-temperature operating fuel cell module is configured such that the fluid supplied to the reformer deprives the heat owned by the high-temperature operating fuel cell, is heated, and is supplied to the reformer. That is, the heat obtained from the high-temperature operating fuel cell can be converted into, for example, a vaporization energy required to generate the humidified raw material.

Therefore, the high-temperature operating fuel cell can be cooled efficiently by the supplied fluid, and hence the utilization efficiency of the air can be improved. That is, the high-temperature operating fuel cell module of the present invention has an advantage that the utilization efficiency of the supplied air can be increased.

Since the high-temperature operating fuel cell system includes the condensation heat exchanger in addition to the above stated high-temperature operating fuel cell module, the exhaust gas exhausted from the high-temperature operating fuel cell module can be cooled by the heat exchange with the outside air to obtain the moisture contained in the exhaust gas. The obtained moisture can cover the reforming water required in the power generation reaction in the solid oxide fuel cell.

That is, the high-temperature operating fuel cell system has an advantage that the utilization efficiency of the supplied air can be increased.

Since the utilization efficiency of the supplied air can be improved, an air supply amount can be reduced as compared to a configuration in which the air is supplied excessively as an oxidizing agent used in the power generation reaction and cools the SOFC like the conventional configuration. Because of this, a dew point at which the condensed water of a required amount is obtained as the reforming water from the exhaust gas can be made higher than in the conventional configuration. Thus, the moisture contained in the exhaust gas can be condensed by the air of the outside air temperature without preparing cooling water or the like.

Therefore, the high-temperature operating fuel cell system of the present invention has an advantage that the water can be supplied easily in a self-sustainable manner within the system.

Next, a configuration of the high-temperature operating fuel cell module in the fuel cell system according to the embodiment of the present invention will be described. In the present embodiment, as an example of the high-temperature operating fuel cell, a solid oxide fuel cell (SOFC) will be described. However, the high-temperature operating fuel cell is not limited to the SOFC, so long as its operation temperature is equal to or higher than 400 degrees C. For example, the high-temperature operating fuel cell may be a molten carbonate fuel cell (MCFC).

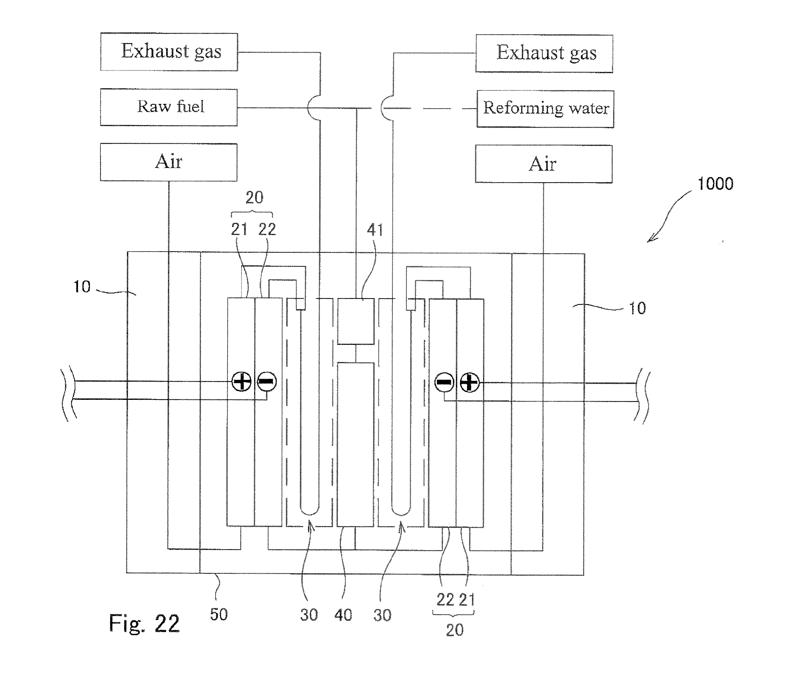

Prior to describing a configuration of a SOFC hot module 100 according to the embodiment of the present invention, a configuration (configuration according to comparative example) of a SOFC hot module 1000 which is a premise of the present invention will be described with reference to Fig. 22.

(**Example of a configuration as a premise of the present invention**)

Fig. 22 is a block diagram schematically showing an example of a configuration of the SOFC hot module 1000 according to comparative example of the present invention.

As shown in Fig. 22, the SOFC hot module 1000 includes a SOFC stack (high-temperature operating fuel cell stack, stacked flat plate type cell stack) 50 including stacked SOFCs (high-temperature operating fuel cells) 20 each having a cathode 21 and an anode 22 (power generation section). In the present invention, a section which includes the cathode 21 and the anode 22, and generates electric power by using fuel and air through a power generation reaction will be referred to as the power generation section. In addition, the SOFC hot module 1000 includes a reformer 40 which steam-reforms a raw material such as a city gas and a vaporizer 41 which vaporizes reforming water used in the steam reforming and supplies the vaporized reforming water to the reformer 40.

A combustion section 30 is provided between the SOFC 20, and the reformer 40 and the vaporizer 41 to cover reforming reaction heat required in the reformer 40 and vaporization heat required in the vaporizer 41. The combustion section 30 combusts exhaust air (cathode-off-gas) exhausted from the cathode 21 and exhaust hydrogen (anode-off-gas) exhausted from the anode 22, to generate a water vaporization energy in the vaporizer 41 and a reforming reaction energy in the reformer 40. At start-up of the SOFC, the combustion section 30 combusts unreformed raw material to preliminarily heat an interior of the SOFC, hot module 1000. That is, a burner 31 (not shown in Fig. 22) combusts the cathode-off-gas exhausted from the cathode 21 in the SOFC 20 and the anode off-gas exhausted from the anode 22 in the SOFC 20 to generate combustion heat used for activating the reformer 40 and the vaporizer 41.

A temperature of the heat required for the reforming reaction is about 650 degrees C, while an added water amount required for the reforming reaction is such that S/C (steam carbon ratio; mol ratio between water and carbon in the raw material) is 2.0 or greater at smallest and is about 2.5 to 3.0. Under a state in which these conditions are controlled to be maintained, a hydrogen-rich reformed gas is generated from the raw material and the reforming water.

The reformed gas generated in the reformer 40 is supplied to the anode 22 of the power generation section in the SOFC 20. The air is supplied from a blower (not shown) to the cathode 21. A reaction occurs electrochemically as indicated by the following formula (3).

$$H_2 + 1/2O_2 \rightarrow H_2O \qquad (3)$$

This reaction is similar to the combustion reaction of hydrogen. A basic principle of the fuel cell is such that an energy corresponding to this combustion energy is taken out electrochemically. In the power generation through this reaction, heat is generated simultaneously. Waste heat resulting from the power generation is removed by excess air (Uo = about 0.2) supplied to the cathode 21 in a conventional configuration. Exhaust gas heat containing the removed heat is secondarily used as energy for vaporization, reforming, preheating of air, etc..

As a result, the vaporizer 41 and the reformer 40 are activated by the waste heat generated during the power generation in the SOFC and the combustion heat of surplus reformed gas. The fuel gas (reformed gas) generated in the activated vaporizer 41 and the activated reformer. 40 activate the SOFC, which is a kind of a power regenerative mechanism. A collective entity which implements the power regenerative mechanism will be referred to as the SOFC hot module 1000. The exhaust gas exhausted from the SOFC hot module 1000 contains the water generated in the fuel cell and the water generated in the combustion, in the form of the steam.

Although not shown, the SOFC 20 is further provided with a current collecting member via which the electric power is drawn to outside. In this way, the user can utilize this electric power.

The above stated electrochemical reaction is carried out in the SOFC 20 in an oxidizing atmosphere of a high temperature of about 1000 degrees C. To make this electrochemical reaction active, it becomes necessary to heat (pre-heat) the air, or the like as the reaction gas up to a desired temperature (about several hundreds degrees C).

To this end, the SOFC hot module 1000 includes an air preheating section 10 for heating the air supplied from the blower (not shown) by the exhaust gas heat within the SOFC hot module 1000, before it is supplied to the cathode 21 in the SOFC 20.

Next, a specific structure of the SOFC hot module 1000 according to comparative example will be described.

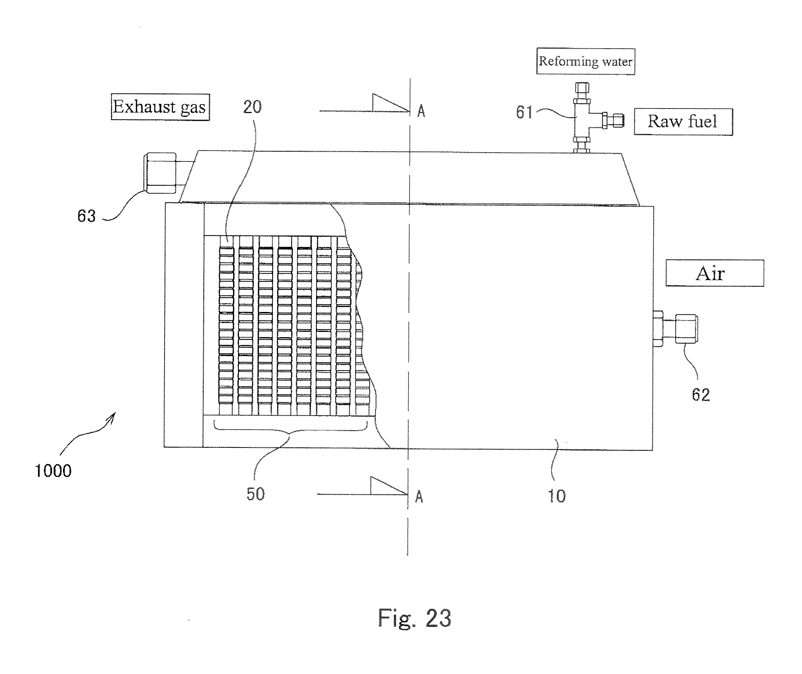

The SOFC hot module 1000 has an outer shape as shown in Fig. 23. Fig. 23 is an example of the outer shape of the SOFC hot module 1000 of Fig. 22. The SOFC hot module 1000 includes inside thereof the air preheating section 10, the SOFC stack 50, the combustion section 30, the reformer 40 and the vaporizer 41 as described above. These members are covered with an outer member having a substantially parallelepiped shape. This outer member has a heating insulating material to prevent heat from being released from inside of the outer member to outside.

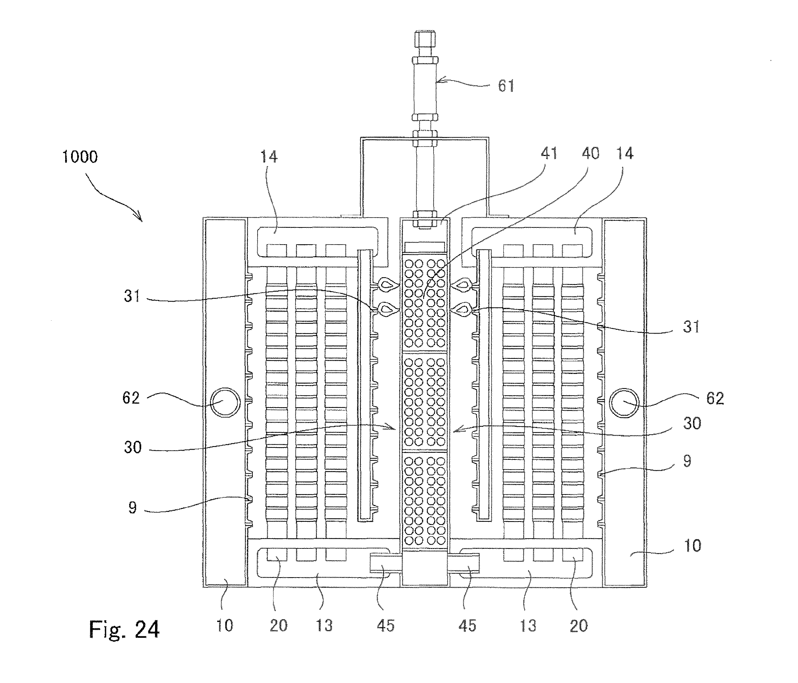

In the example of the outer shape of Fig. 23, the SOFC hot module 1000 is provided on a right side surface thereof with an air inlet 62 to receive the air supplied from the blower (not shown). In addition, the SOFC hot module 1000 is provided on a right portion of an upper surface thereof with a raw material inlet 61 to receive the reforming water and the raw material. Further, the SOFC hot module 1000 is provided with an exhaust port 63 on a portion of the left side surface which is in the vicinity of the upper surface to exhaust the exhaust gas. For example, Fig. 24 shows a cross-sectional shape of the SOFC hot module 1000, which is taken along A-A of Fig. 23. Fig. 24 is a view showing an example of the cross-sectional shape of the outer shape of the SOFC hot module 1000, which is taken along A-A of Fig. 23.

As shown in Fig. 24, in the SOFC hot module 1000, the vaporizer 41 and the reformer 40 are aligned on a center line of its cross-section. Assuming that the vaporizer 41 and the reformer 40 are one straight line, the combustion sections 30, the SOFCs 20, and the air preheating sections 10 are arranged laterally symmetrically, with respect to this straight line.

The SOFC 20 is provided with supply headers 13 which receive the fuel gas (reformed gas) and the air supplied, on a bottom surface side of the SOFC hot module 1000 and provided with discharge headers 14 which discharge the cathode-off-gas and the anode-off-gas, on an upper surface side of the SOFC hot module 1000.

Specifically, the raw material and the reforming water are supplied to the vaporizer 41 through the raw material inlet 61. The vaporizer 41 vaporizes the reforming water. A mixture gas of the steam and the raw material is generated and supplied to the reformer 40. The reformer 40 generates hydrogen through the steam reforming reaction, and supplies as the fuel gas (reformed gas) to the supply headers 13 in the SOFC 20 through reformed gas inlets 45.

By comparison, the air is supplied to the air preheating sections 10 through the air inlets 62. The air pre-heated in the air preheating sections 10 is discharged toward the SOFC 20 through air outlets 9 and supplied to the SOFC 20 via the supply headers 13.

As shown in Fig. 24, the combustion sections 30 are provided on both side surfaces of the reformer 40. In the combustion sections 30, the burners 31 combust the anode-off-gas, the cathode-off-gas, or the like.

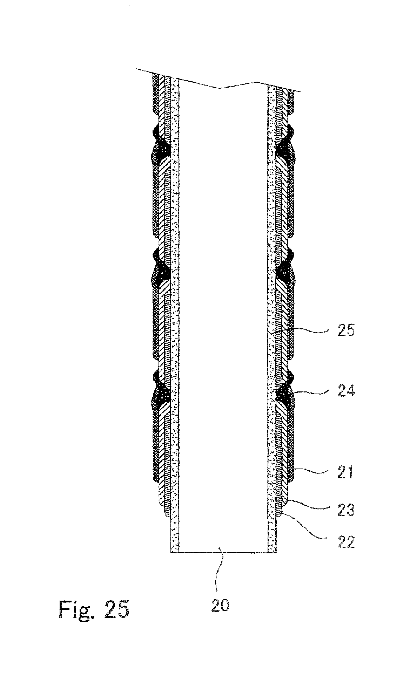

As shown in Fig. 25, for example, the shape of the SOFC 20 may be realized as so-called a flatten tubular segmented-in-series type SOFC. Fig. 25 is a cross-sectional view showing an example of a structure of the flatten tubular segmented-in-series type SOFC, in the SOFC hot module 1000 of Fig. 22.

In a case where the SOFC 20 is realized as the flatten tubular segmented-in-series type SOFC as shown in Fig. 25, there is provided a cell in which the anode 22, an electrolyte 23, and the cathode 21 are stacked together in this order, on outside of a base tubular body 25 which is a porous support pipe, and cells are arranged such that an interconnector 24 intervenes between them. In the case of the flatten tubular segmented-in-series type SOFC, the fuel gas (reformed gas) flows inside of the base tubular body 25, while the air flows outside of the base tubular body 25.

(**SOFC hot module**)

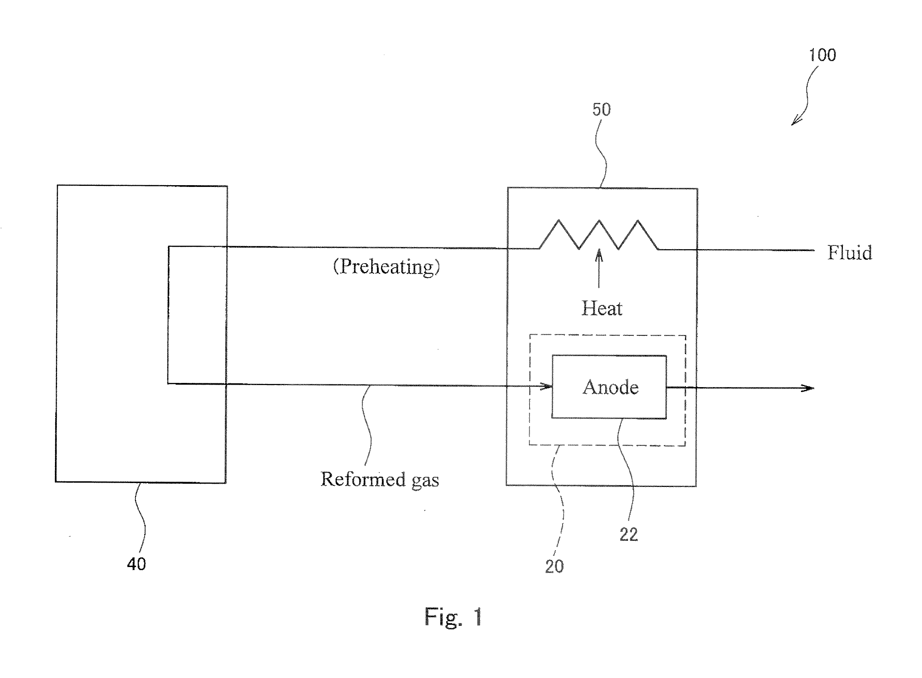

Next, a characteristic configuration of the SOFC hot module 100 according to the present embodiment will be described with reference to Fig. 1. Fig. 1 is a view schematically showing an example of a configuration which provides heat of the SOFC 20 to fluids (raw material and water) supplied to the reformer 40 in the SOFC hot module 100 according the embodiment of the present invention. For easier explanation, Fig. 1 shows only flows of the fluids (raw material and water) supplied to the reformer 40, and does not show the flow of the air supplied to the SOFC 20 constituting the SOFC stack 50.

As shown in Fig. 1, the SOFC hot module 100 according to the present embodiment is configured in such a manner that the reformer 40 generates the reformed gas using the fluids supplied from outside, such as the raw material and the water (reforming water) and supplies the reformed gas as the fuel gas to the SOFC stack 50. As shown in Fig. 1, the fluids (raw material and water) are preheated by the heat generated in the SOFC 20 (SOFC stack 50) before they are supplied to the reformer 40.

In the SOFC hot module 100 of the present embodiment, the fluids supplied from outside deprive the heat from the SOFC 20 (SOFC stack 50), to cool the SOFC 20, so that the fluid is heated. Therefore, the raw material can be pre-heated or the reforming water can be vaporized by utilizing the heat from the SOFC 20 (SOFC stack 50). That is, the heat obtained from the SOFC 20 can be converted into a vaporization energy required to generate, for example, a humidified raw material.

Therefore, the amount of the air supplied to the SOFC 20 to cool the SOFC 20 (SOFC stack 50) can be reduced.

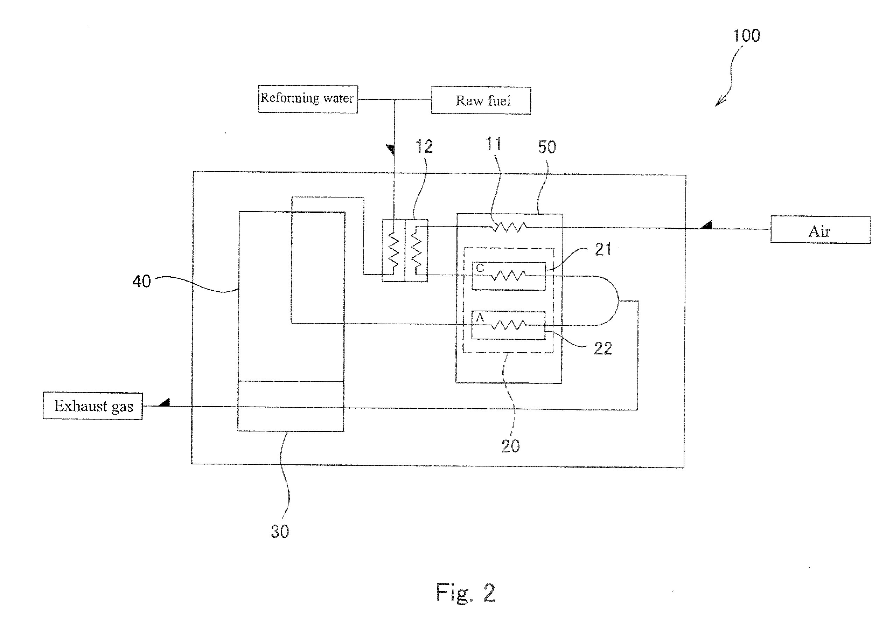

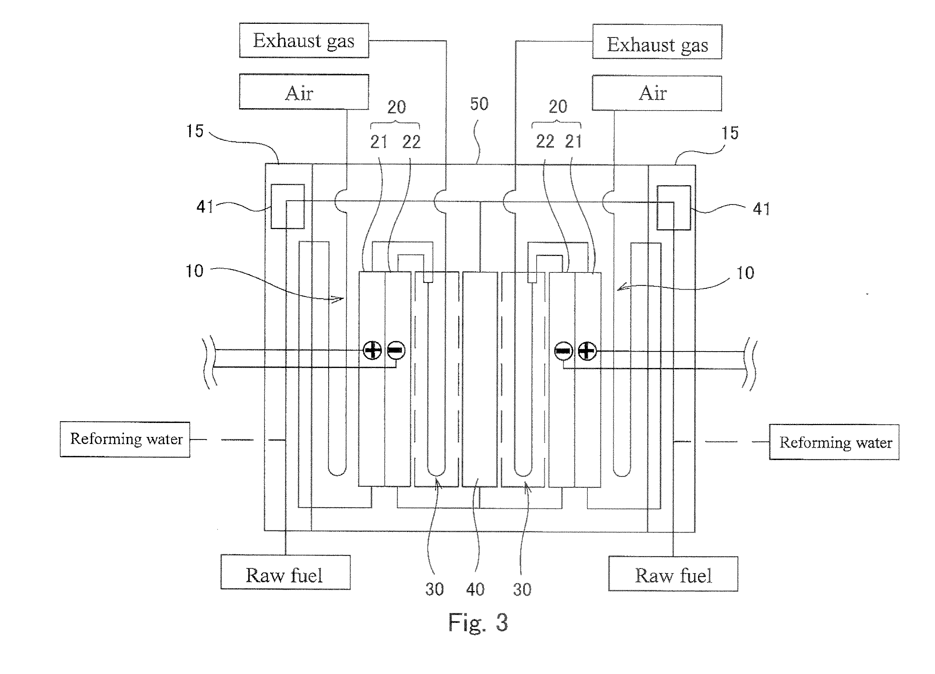

Next, a specific configuration for implementing the SOFC hot module 100 of Fig. 1 will be described with reference to Figs. 2 and 3. Fig. 2 is a view schematically showing an example of paths through which the air, the raw material, and the reforming water flow in the SOFC hot module 100 according the present embodiment. Fig. 3 is a view schematically showing a configuration of the SOFC hot module 100 according the present embodiment.

The SOFC hot module 100 according the present embodiment is different from the above stated SOFC hot module 1000 according to comparative example in the features described below. In the SOFC hot module 100 according the present embodiment, the same components as those of the SOFC hot module 1000 according to comparative example are identified by the same reference symbols and will not be described.

In the SOFC hot module 1000 according to comparative example, as described above, the air supplied to the SOFC hot module 1000 is heated by the heat of the exhaust gas or the like in the air pre-heating section 10 and supplied to the cathode 21 of the SOFC 20. By comparison, in the SOFC hot module 100 according the present embodiment, the air is supplied to the cathode 21 through the path described below.

Specifically, the air supplied to the SOFC hot module 100 is caused to exchange heat with the SOFC 20 in a first heat exchanger section 11 in the SOFC stack 50. By this heat exchange, the air is heated (pre-heated) by the heat owned by the SOFC 20. In other words, the air cools the SOFC 20 (pre-cooling) and raises its temperature. Then, the air which has gained heat by this heating is output to a second heat exchanger section 12. At least one of the raw material and the reforming water has been supplied to the second heat exchanger section 12. The second heat exchanger section 12 exchanges heat between the air having gained heat, and at least one of the raw material and the reforming water.

The air having gained the heat from the SOFC 20 discards the heat by the heat exchange in the second heat exchanger section 12 and is allowed to have a state in which it will be able to cool substances. In this state, the air is supplied to the SOFC 20. The air is consumed as the oxidizing gas in a cell reaction and cools (main cooling) the SOFC 20 again. That is, the air having decreased its heat amount by the heat exchange with at least one of the raw material and the reforming water, exchanges heat with the SOFC 20 while going through the electrochemical reaction in the power generation section in the SOFC 20.

At least one of the raw material and the reforming water which have been heated by the heat exchange with the air is supplied to the reformer 40. The reformer 40 performs the steam reforming. The reformed gas (fuel gas) generated through the steam reforming is supplied to the anode 22 in the power generation section in the SOFC 20. The reformed gas cools the SOFC 20 when the reformed gas is consumed as the fuel gas in the cell reaction.

As described above, in the SOFC hot module 100 according the present embodiment, the air supplied from outside cools the SOFC 20. The air heated by the heat owned by the SOFC 20 is caused to exchange heat with at least one of the raw material and the reforming water, and thereby is cooled. The air, from which a portion of its heat has been deprived, by this heat exchange, is supplied as an oxidant to the cathode 21 in the power generation section, and cools the SOFC 20 as a cooling medium (main cooling) again. The reformed gas generated in the reformer 40 is supplied as the fuel gas to the anode 22 in the power generation section, and cools the SOFC 20 as the cooling medium.

In the SOFC hot module 100 according the present embodiment, combustion exhaust gases (cathode-off-gas and anode-off-gas) exhausted after the electrochemical reaction in the SOFC 20 is heated by the heat generated in the power generation reaction in the power generation section in the SOFC 20 and is guided to the combustion section 30 in this heated state. The combustion section 30 combusts these combustion exhaust gases. By the resulting combustion heat, the reforming reaction in the reformer 40 proceeds. The combustion exhaust gases exhausted from the SOFC 20 contain unconsumed fuel gas and the air (oxygen). The combustion section 30 combusts the unconsumed fuel gas and the air.

From a view point of energy, a portion of the waste heat resulting from the power generation in the SOFC 20 is used as a vaporization energy and a reforming energy, which can reduce the amount of air used for cooling the cell.

As can be seen from the comparison between the configuration of the SOFC hot module 1000 according to comparative example of Fig. 19 and the configuration of the SOFC hot module 100 according the present embodiment, a location of the vaporizer 41 is different. As can be seen from the comparison between them with reference to Figs. 3 and 19, the vaporizer 41 is placed in a previous stage of the reformer 40, and arrangement of them is the same systematically. However, in the configuration of the comparative example of Fig. 19, the reformer 40 and the vaporizer 41 are arranged adjacently. By comparison, in the SOFC hot module 100 according the present embodiment, as shown in 3, the reformer 40 and the vaporizer 41 are placed to be distant from each other. More specifically, in the SOFC hot module 100 according the present embodiment, as shown in Fig. 3, the SOFC stack 50 is sandwiched between outer end headers (raw material supply layers) 15 containing therein the vaporizers 41 and the reformer 40.

(**Modified example 1**)

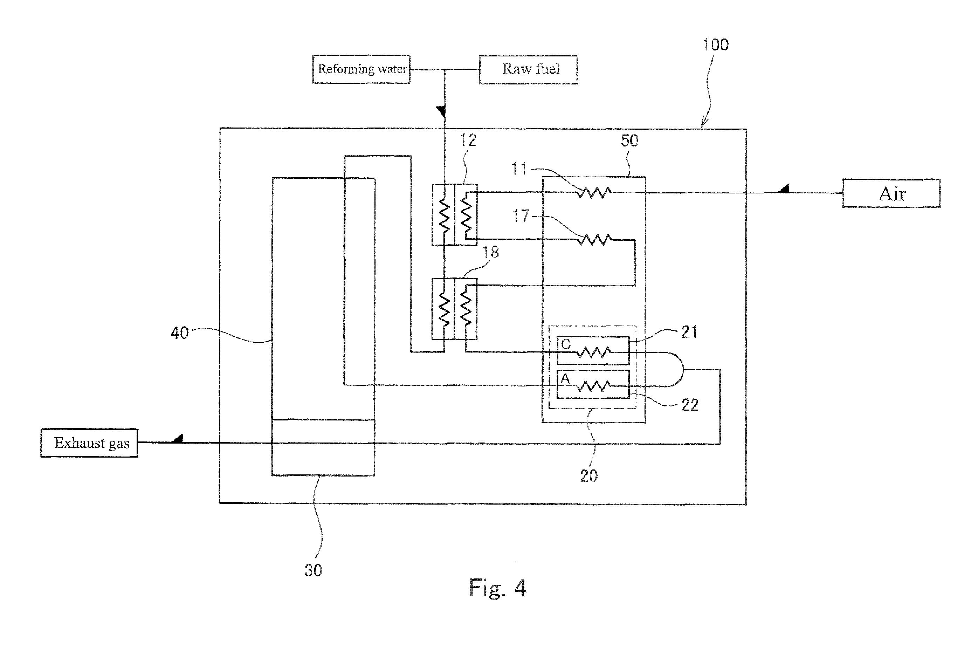

Next, Modified example 1 of the SOFC hot module 100 of Fig. 2 will be described with reference to Fig. 4. Fig. 4 is a view schematically showing an example of paths through which air and fluids (raw material and reforming water) flow in the SOFC hot module 100 according the present embodiment.

In Modified example 1, in the configuration of the SOFC hot module 100 of Fig. 2, the air having been cooled by the heat exchange with the fluid in the second heat exchanger section 12 is guided again to the SOFC stack 50. Then, in the third heat exchanger section 17, the air is caused to exchange heat with the SOFC stack 50 again. The air having been heated by the heat exchange with the SOFC stack 50 in the third heat exchanger section 17 is output to a fourth heat exchanger section 18. In the fourth heat exchanger section 18, the air is caused to exchange heat with the fluids (at least one of the raw material and the reforming water).

That is, the air gains heat in each of the first heat exchanger section 11 and the third heat exchanger section 17 from the SOFC 20, and then discards the heat by the heat exchange in each of the second heat exchanger section 12 and the fourth heat exchanger section 18, thereby having a state in which the air will be able to cool substances. The air having a state in which the air will be able to cool the SOFC 20, is finally supplied to the SOFC 20. In the SOFC 20, the air cools the SOFC 20 (main cooling) again when the air is consumed as the oxidizing gas in the cell reaction.

As described above, in the SOFC hot module 100 according to Modified example 1 of the present embodiment, the air supplied from outside cools the SOFC 20 in the SOFC stack 50 once. Then, the air having been heated by the heat owned by the SOFC 20 in the SOFC stack 50, is caused to exchange heat with the fluid (at least one of the raw material and the reforming water) in the second heat exchanger section 12, and thereby is cooled. The air, from which a portion of its heat has been deprived by the heat exchange in the second heat exchanger section 12, is guided again to the SOFC stack 50. The air further cools the SOFC 20 in the SOFC stack 50 by the heat exchange in the third heat exchanger section 17. Then, the air having been heated by the heat owned by the SOFC 20 in the SOFC stack 50 is guided to the fourth heat exchanger section 18. In the fourth heat exchanger section 18, the air is caused to exchange heat with the fluids (at least one of the raw material and the reforming water), and thereby is cooled again.

Thereby, the air, from which a portion of its heat has been deprived, is supplied as the oxidant to the cathode 21 in the power generation section, and cools the SOFC 20 again as the cooling medium (main cooling).

The fluid having exchanged heat with the air in fourth heat exchanger section 18, vaporizes the reforming water by utilizing the heat owned by the air and becomes the humidified raw material, which is supplied to the reformer. 40. The reformer 40 generates the reformed gas from the humidified raw material. This reformed gas is supplied as the fuel gas to the anode 22 in the power generation section and cools the SOFC 20 as the cooling medium.

From a view point of energy, a portion of the waste heat resulting from the power generation in the SOFC 20 is used as an energy for preheating the fluids, which can reduce the amount of air used for cooling the SOFC 20. In particular, the air is caused to exchange heat with the SOFC 20 in the first heat exchanger section 11 and in the second heat exchanger section 17. The air having been heated by this heat exchange transfers the heat obtained from the SOFC 20 to the fluids by the heat exchange with the fluid in the third heat exchanger section 12 and in the fourth heat exchanger section 18. That is, a portion of the waste heat resulting from the power generation in the SOFC 20 can be efficiently used as the energy for preheating the fluid.

(**Modified example 2**)

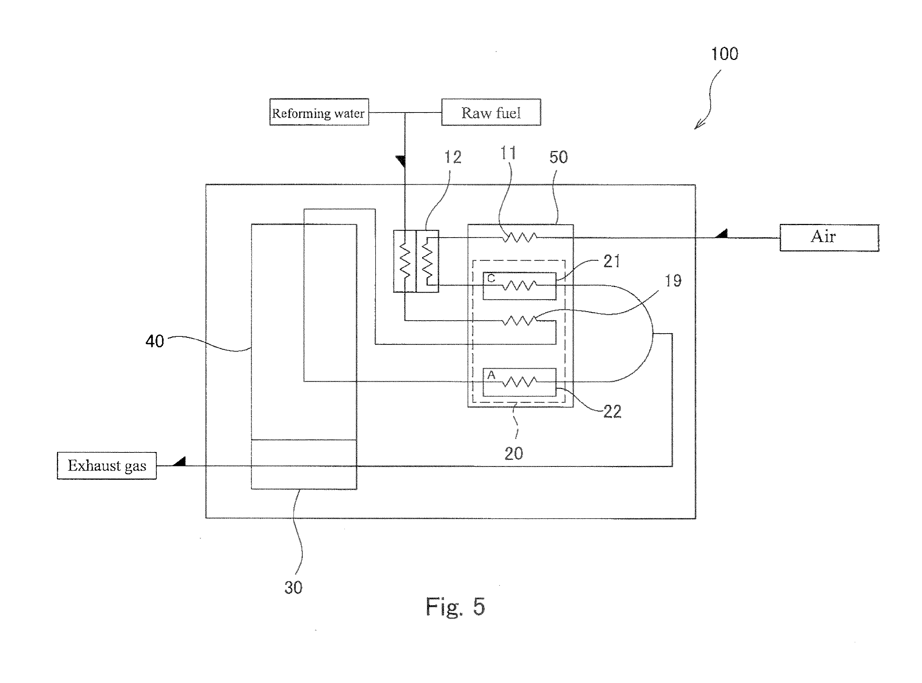

Next, Modified example 2 of the SOFC hot module 100 of Fig. 2 will be described with reference to Fig. 5. Fig. 5 is a view schematically showing an example of paths through which air and fluids (raw material and reforming water) flow in the SOFC hot module 100 according the present embodiment.

The SOFC hot module 100 according to Modified example 2 is different in configuration from the SOFC hot module 100 of Fig. 2 in that the fluid heated by the heat exchange with the air in the second heat exchanger section 12 is guided to the SOFC stack 50. In addition, the SOFC hot module 100 according to Modified example 2 is different in configuration from the SOFC hot module 100 of Fig. 2 in that the fluid guided to the SOFC stack 50 is caused to exchange heat with the SOFC 20 in the SOFC stack 50, and then is supplied to the reformer 40.

As shown in Fig. 5, the SOFC hot module 100 according to Modified example 2 vaporizes the reforming water by utilizing the heat owned by the air having deprived the heat from the SOFC 20 and thereby having been heated, to generate the humidified raw material. In the SOFC hot module 100 according to Modified example 2, the generated humidified raw material deprives the heat from the SOFC 20 in the SOFC stack 50 and thereby is preheated.

Since the SOFC hot module 100 is configured as described above, the humidified raw material in addition to the air can be used as the fluids used for directly cooling the SOFC 20.

As described above, in the SOFC hot module 100 according to the present embodiment, the air and the humidified raw material which are supplied to the power generation section in the SOFC 20 can be utilized as the fluids used for directly cooling the SOFC 20. The combustion section 30 combusts the combustion exhaust gases (anode-off-gas and cathode-off-gas) exhausted from the SOFC 20 to generate heat which can activate the reformer 40. This means that the SOFC hot module 100 can be operated while utilizing the waste heat resulting from the power generation in the SOFC 20 as the vaporization energy and the reforming energy. Therefore, the amount of the air supplied from outside excessively to cool the SOFC 20 can be reduced, a steam partial pressure (dew point) in the exhaust gas can be increased, and as a result, the water can be supplied in a sustainable manner easily within the system.

(**Modified example 3**)

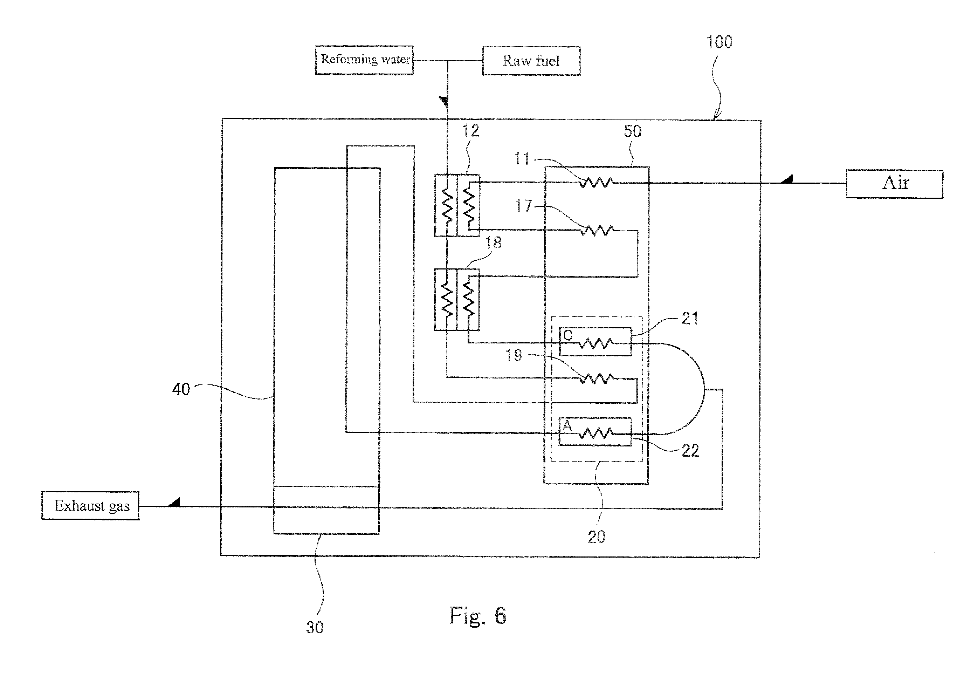

Next, Modified example 3 of the SOFC hot module 100 of Fig. 2 will be described with reference to Fig. 6. Fig. 6 is a view schematically showing an example of paths through which air and fluids (raw material and reforming water) flow in the SOFC hot module 100 according the present embodiment.

The SOFC hot module 100 according to Modified example 3 is a combination of the above configuration of Modified example 1 and the above configuration of Modified example 2. In the configuration of the SOFC hot module 100 according to Modified example 1, the fluid having exchanged heat with the air in the fourth heat exchanger section 18 becomes the humidified raw material which is supplied to the reformer 40, whereas in the SOFC hot module 100 according to Modified example 3, the fluid having exchanged heat with the air in the fourth heat exchanger section 18 becomes the humidified raw material which is guided to the SOFC stack 50. In addition, in the SOFC stack 50, the humidified raw material is caused to exchange heat with the SOFC 20 in the fifth heat exchanger section 19, and the heated humidified raw material is supplied to the reformer 40.

The other configuration is the same as those of the above stated Modified example 1 and Modified example 2, and therefore will not be described in repetition.

[**Example of configuration of SOFC hot module**]

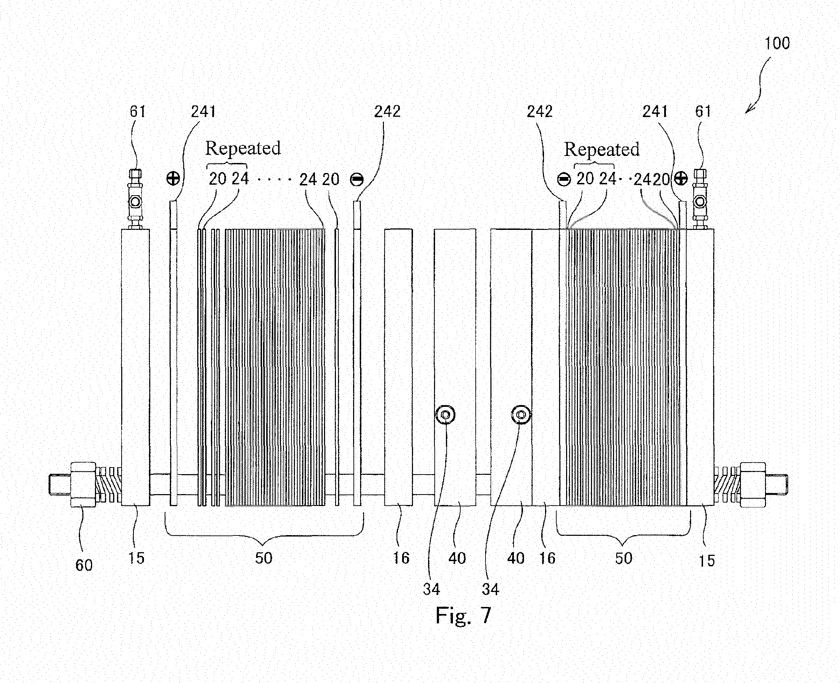

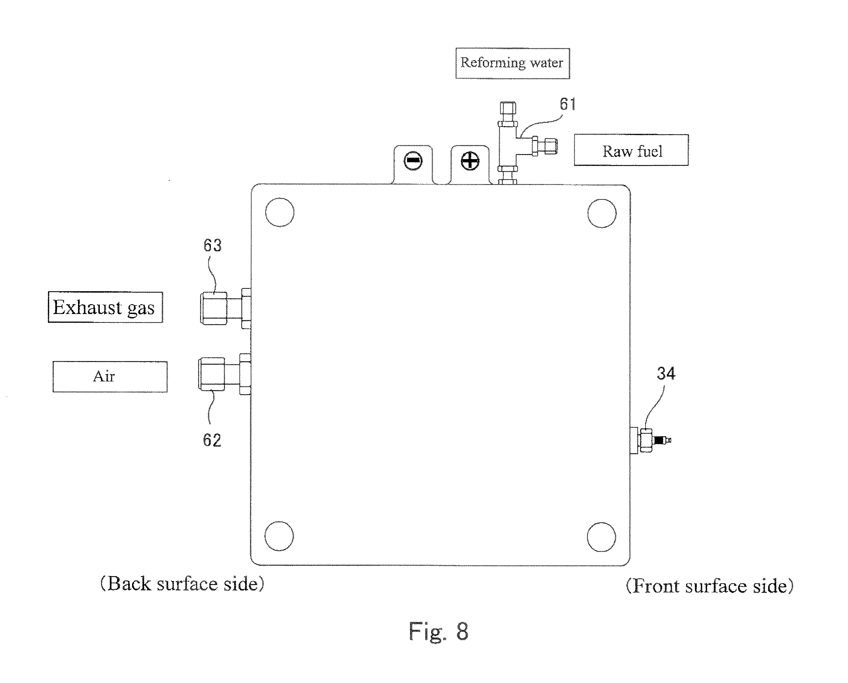

Next, a specific example of the configuration of the above stated SOFC hot module 100 will be described with reference to Figs. 7 and 8. In particular, as a specific example of the configuration of the SOFC hot module 100, the SOFC hot module 100 according to Modified example 3 will be exemplarily described. Fig. 7 is a front view showing an example of the specific configuration of the SOFC hot module according the present embodiment. Fig. 8 is a side view showing an example of the specific configuration of the SOFC hot module 100 according the present embodiment.

Hereinafter, it is supposed that a surface at a near side in Fig. 7 in the SOFC hot module 100 of Fig. 7 is a front surface of the SOFC hot module 100 and a surface at an opposite side of the near side is a back surface of the SOFC hot module 100.

Initially, a specific outer shape of the SOFC hot module 100 of the present embodiment will be described with reference to Figs. 7 and 8. Fig. 7 is a front view of the SOFC hot module 100, and Fig. 8 is a side view of the SOFC hot module 100. In Fig. 7, gaskets for sealing adjacent members are not shown for easier explanation. To clearly show members, a part of the members at a left half part of the SOFC hot module 100 are apart from each other. However, actually, stack members are fastened together by a fastener member 60 such that they are in contact with each other. The SOFC stack 50 of the present embodiment is a flat plate stacked type cell stack in which rectangular SOFCs 20 are stacked together. Therefore, as shown in Fig. 8, the SOFC hot module 100 including the flat plate stacked type SOFC stack 50 has a side surface of a substantially square shape, and a front surface of a substantially rectangular shape, which form a rectangular parallelepiped shape. The shape of the SOFC stack 50 is not limited to this flat plate stacked type, but may be other shape such as a cylindrical type.

The SOFC stack 50 includes a plurality of SOFCs 20, a plurality of interconnectors 24, a cathode end interconnector 241, and an anode end interconnector 242. The plurality of SOFCs 20 and the plurality of interconnectors 24 are arranged alternately. The cathode end interconnector 241 is placed at a cathode side terminal end portion, while the anode end interconnector 242 is placed at anode side terminal end portion. More specifically, in a direction from the cathode side (left side in Fig. 7) in Fig. 7, the cathode end interconnector 241, the SOFC 20, the interconnector 24, the SOFC 20, the interconnector 24, ... the SOFC 20, and the anode end interconnector 242 are stacked together in this order.

The outer end headers 15, the cathode end interconnectors 241, the SOFCs 20, the interconnectors 24, and the anode end interconnectors 242 are placed to be oriented vertically such that they are laterally symmetric with respect to the reformers 40 placed at a center. In the example of Fig. 7, right and left terminal end portions (outer end portions) of the SOFC hot module 100 are cathode sides.

(**Flow of air flowing through SOFC hot module**)

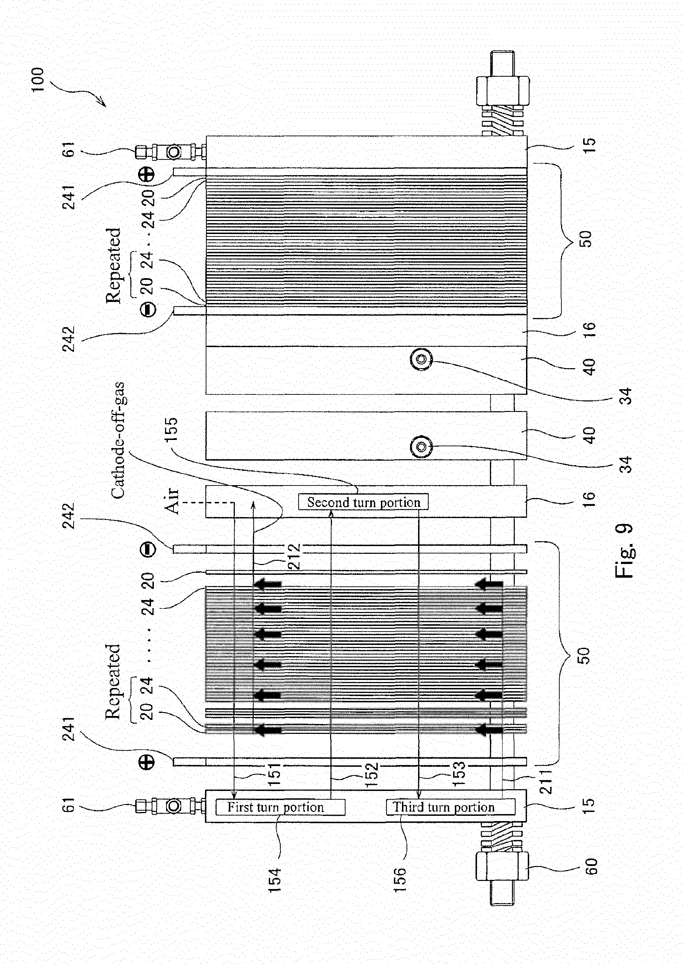

Next, the flow of the air flowing through the SOFC hot module 100 will be described with reference to Fig. 9. Fig. 9 is a view showing the flow of the air flowing through the SOFC hot module 100 according the present embodiment. In Fig. 9, gaskets for sealing adjacent members are not shown for easier explanation. To clearly show members, a part of the members at a left half part of the SOFC hot module 100 to are apart from each other. However, actually, stack members are fastened together by the fastener member 60 such that they are in contact with each other.

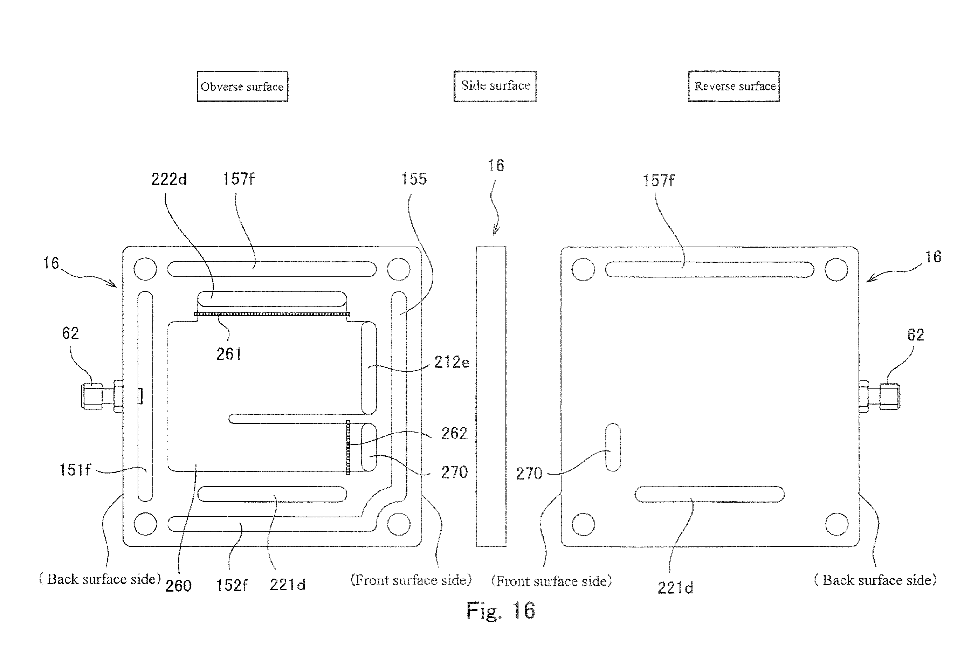

Initially, the air is supplied to a first air preheating manifold 151 of a reformer connection header (reformer connection layer) 16 via the air inlet 62 (not shown in Fig. 9, see Fig. 16 as described later) provided on a back surface side of the reformer connection header 16. The air flows through the first air preheating manifolds 151 provided in the corresponding locations of the anode end interconnector 242, the SOFC 20, ... the interconnector 24, ... and the cathode end connector 241 and reaches a first turn portion 154 formed at the outer end header 15.

At this time, the air flowing through the first air preheating manifolds 151 deprives the heat owned by the SOFCs 20 to cool the SOFCs 20, and thereby is heated. Then, in the first turn portion 154 of the outer end header 15, the flow of the air is turned so that the air is guided from the first air preheating manifold 151 to a second air preheating manifold 152.

The air, a flow of which has been turned, flows through the second air preheating manifolds 152 provided in the corresponding locations of the cathode end interconnector 241, the SOFC 20, ... the interconnector 24, ... and the anode end connector 242 and reaches a second turn portion 155 of the reformer connection header 16.

After the air has reached the second turn portion 155, the flow of the air is turned so that the air is guided to a third air preheating manifold 153. The air flows through the third air preheating manifolds 153 provided in the corresponding locations of the anode end interconnector 242, the SOFC 20, ... the interconnector 24, ... and the cathode end connector 241 and reaches a third turn portion 156 formed at the outer end header 15. Then, in the third turn portion 156, the flow of the air is turned so that the air is guided to a cathode entrance manifold 211.

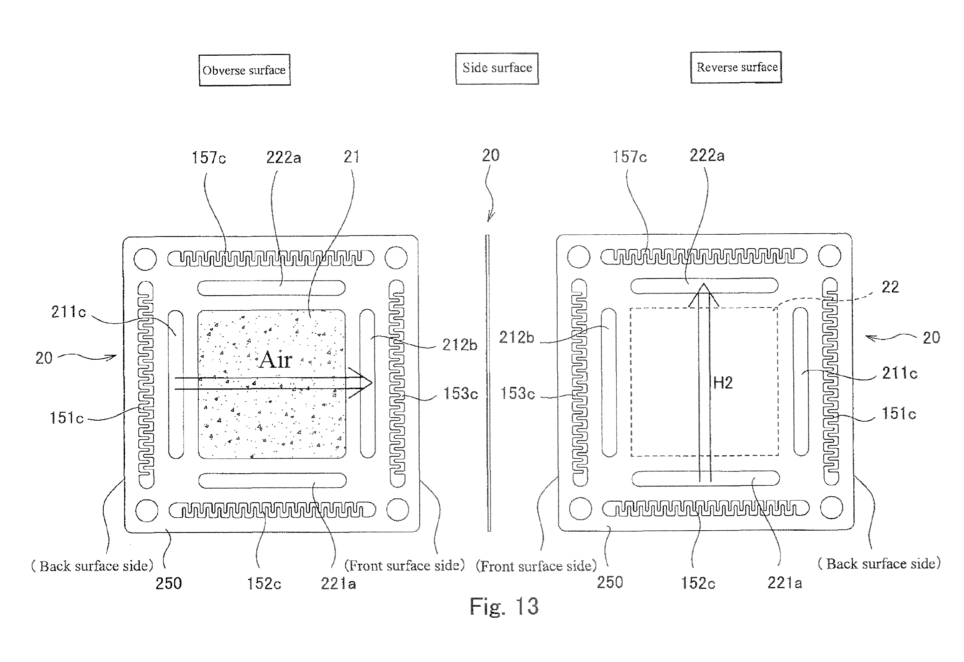

The air having been guided to the cathode entrance manifold 211 is supplied to the cathode end interconnector 241 and to the interconnectors 24 (cathode passages 213a, 213b as will be described later), and oxygen is consumed in the cathodes 21 (not shown in Fig. 9, see Fig. 13 as will be described later) of the SOFCs 20. Simultaneously, the air introduced into the cathode entrance manifolds 211 cools the SOFCs 20 and is discharged into a cathode exit manifold 212. All of the air, oxygen of which has been consumed, finally flows through the anode end interconnector 242 and is discarded in an off-gas mixing section 260 (not shown in Fig. 9, see Fig. 16 as will be described later) of the reformer connection header 16.

In the above series of flow of the air, in the preheating manifolds in the SOFC stack 50, the air is heated while cooling the SOFC stack 50, and reaches the outer end header 15 each time. Then, the air discards the heat in the outer end header 15 via heat exchange fins, or the like provided in the turn portions (first turn portion 154, third turn portion 156) of the outer end header 15 and thereby is cooled. Thereby, the air restores its cooling ability and then flows again to cool the SOFC stack 50.

**(Flow of raw material and reforming water flowing through SOFC hot module)**

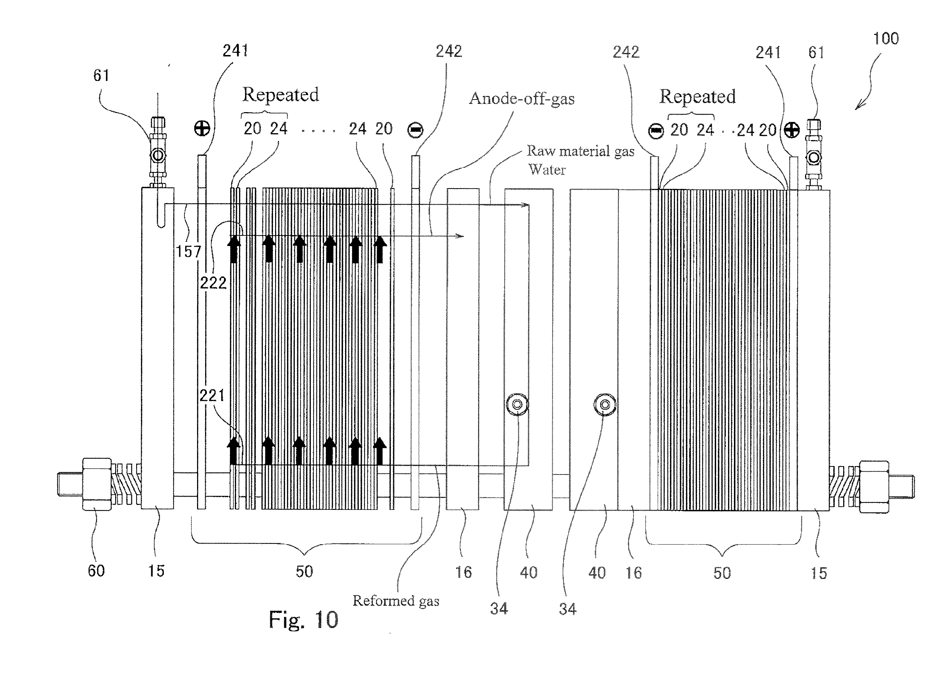

Fluids (raw material and reforming water) supplied to the SOFC hot module 100 flow as follows. Flereinafter, the flow of the fluids (raw material and reforming water) flowing through the SOFC hot module 100 will be described with reference to Fig. 10. Fig. 10 is a view showing an example of flows of the raw material and reforming water flowing through the SOFC hot module 100 according the present embodiment. In Fig. 10, gaskets for sealing adjacent members are not shown for easier explanation. To clearly show members, a part of the members at a left half part of the SOFC hot module 100 are apart from each other. However, actually, stack members are fastened together by the fastener member 60 such that they are in contact with each other.

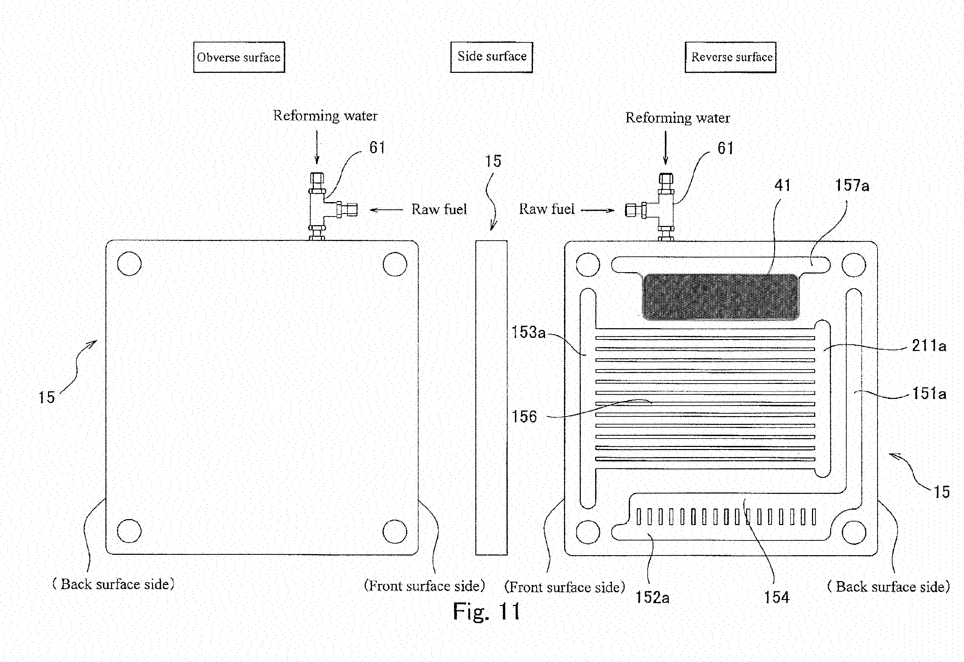

Initially, the raw material and the reforming water are supplied to the outer end header 15 via the raw material inlet 61. In the outer end header 15, the raw material and the reforming water are supplied to a raw material preheating manifold 157 as will be described later. The reforming water is dropped to the vaporizer 41 (see Fig. 11 as will be described later) in the outer end header 15, and is vaporized by the heat obtained from the air supplied to the outer end header 15. That is, the heat for vaporizing the reforming water is the heat obtained from the SOFC 20 by the air flowing through the above stated preheating manifolds. That is, the reforming water gains the heat deprived from the SOFC 20 by the air via the heat exchange fins provided in the first turn portion 154 and the third turn portion 156, and thereby is vaporized. The vaporized reforming water and the raw material are mixed to generate a humidified raw material. The humidified raw material flows through raw material preheating manifolds (raw material passages) 157 provided in the corresponding locations of the cathode end interconnector 241, the SOFC 20, ... the interconnector 24, ... and the anode end connector 242, and reaches a raw material preheating manifold 157 as will be described later (humidified raw material receiving hole) f (not shown in Fig. 10) in the reformer connection header 16.

By an operation of the reformer 40 as will be described later, the humidified raw material is steam-reformed into a reformed gas containing hydrogen of about 80%. The reformed gas is introduced into the SOFC stack 50 through the anode entrance manifold 221 via the reformer connection header 16.

The reformed gas (fuel) having been introduced into the SOFC stack 50 is supplied to the anode end interconnector 242 and to the interconnectors 24, and hydrogen is consumed in the anodes 22 of the SOFCs 20. Simultaneously, the reformed gas cools the SOFCs 20 and is discharged to anode exit manifolds (discharge pipe) 222. The reformed gas, hydrogen of which has been consumed finally flows through the anode exit manifold 222 of the anode end interconnector 242, and is discarded in the off-gas mixing section 260 (see Fig. 16 as will be described later) of the reformer connection header 16.

Finally, the anode-off-gas and the cathode-off-gas are mixed in the off-gas mixing section 260 into a reformed air-fuel mixture, which is supplied to the combustion section 30 of the reformer 40 via an off-gas manifold (combustion exhaust gas supply hole) 270.

As can be obvious from the series of flow of the fluids as described above, the SOFC hot module 100 of the present embodiment has features that the reforming water is vaporized by the pre-heated air having cooled the SOFC 20.

In the SOFC hot module 100 of Figs. 9 and 10. the first heat exchanger section 11 is implemented as the first air preheating manifold (first air passage) 151. The third heat exchanger section 17 is implemented as the second air preheating manifold (second air passage) 152 and the third air preheating manifold (second air passage) 153. The second heat exchanger section 12 is implemented by the first turn portion 154 which exchanges heat with the air, while the fourth heat exchanger section 18 is implemented by the third turn portion 156. By the heat exchange with the air in the second heat exchanger section 12 and in the fourth heat exchanger section 18, the heat transferred from the air heats the vaporizer 41, and as a result heats the fluids (raw material and reforming water) to generate the humidified raw material.

That is, when the air is supplied to the SOFC hot module 100, the air exchanges heat with the SOFCs 20 while flowing through the first air preheating manifolds 151, the second air preheating manifolds 152, and the third air preheating manifolds 153. By this heat exchange, the air cools the SOFCs 20 and thereby is heated (preheated).

The heat gained by the heat exchange with the heated air is transferred to the vaporizer 41 via the first turn portion 154 and the third turn portion 156. By utilizing the transferred heat, the vaporizer 41 vaporizes the reforming water supplied from outside, to generate the mixture gas (humidified raw material) of steam and the raw material. In the SOFC hot module 100, the heat exchange between the air and the vaporizer 41 occurs via the first turn portion 154 (second heat exchanger section 12) and the third turn portion 156 (fourth heat exchanger section 18), to heat the vaporizer 41. However, a member which exchanges heat via the first turn portion 154 (second heat exchanger section 12) and the third turn portion 156 (fourth heat exchanger section 18) is not limited to the vaporizer 41. For example, the member may be a manifold provided to preheat the raw material and to flow the raw material.

In the configuration of the present embodiment, in which the vaporizer 41 is heated via the first turn portion 154 (second heat exchanger section 12) and the third turn portion 156 (fourth heat exchanger section 18), a portion of reforming/vaporizing energy is supplied from the heated air and used to vaporize the reforming water, from the perspective of the raw material and the reforming water. In a case where a further increase is allowed by the heat energy supplied from the air, a portion of the reforming energy may be covered by preheating the raw material and the reforming water before they are supplied to the reformer 40,

Next, a description will be given of a detailed structure of the above members (outer end header 15, cathode end interconnector 241, SOFC 20, interconnector 24, anode end interconnector 242, reformer connection header 16, and reformer 40) constituting the SOFC hot module 100.

Now, an attention will be focused on a structure of a left half portion relative to the reformer 40 located at the center, in the SOFC hot module 100 of Fig. 7. Regarding the outer end header 15, the cathode end interconnector 241, the SOFC 20, the interconnector 24, and the anode end interconnector 242, their surfaces of a left end side in Fig. 7, of both end portions in a direction in which these members are stacked, are obverse surfaces, and their surfaces of a right end side in Fig. 7 are reverse surfaces. Also, regarding the outer end header 15, the cathode end interconnector 241, the SOFC 20, the interconnector 24, and the anode end interconnector 242, surfaces defining a front surface or a back surface of the SOFC hot module 100 are side surfaces.

(**Structure of outer end header**)

Firstly, a structure of the outer end header 15 located at the left end in Fig. 7 will be described with reference to Fig. 11. Fig. 11 is a view showing an example of an obverse surface, a side surface and a reverse surface of the outer end header 15 constituting the SOFC hot module 100 according the present embodiment.

The outer end header 15 has a plate shape having a square surface as shown by the obverse surface or the reverse surface of Fig. 11. The outer end header 15 is provided on an upper surface thereof with the raw material inlet 61 to receive the reforming water and the raw material.

On the reverse surface of the outer end header 15, there are formed four preheating manifolds enclosing an outer periphery of the reverse surface. In the vicinity of the outer periphery of the reverse surface of the outer end header 15, there are formed a raw material preheating manifold 157a at an upper surface side, a first air preheating manifold 151a on a side portion placed at a back surface side of the SOFC hot module 100, a second air preheating manifold 152a on a bottom surface side, and a third air preheating manifold 153a on a side portion placed at a front surface side of the SOFC hot module 100. In a case where these preheating manifolds need not be described such that they are differentiated from each other for the respective members stacked, they will be simply referred to as the raw material preheating manifold 157, the first air preheating manifold 151, the second air preheating manifold 152, and the third air preheating manifold 153.

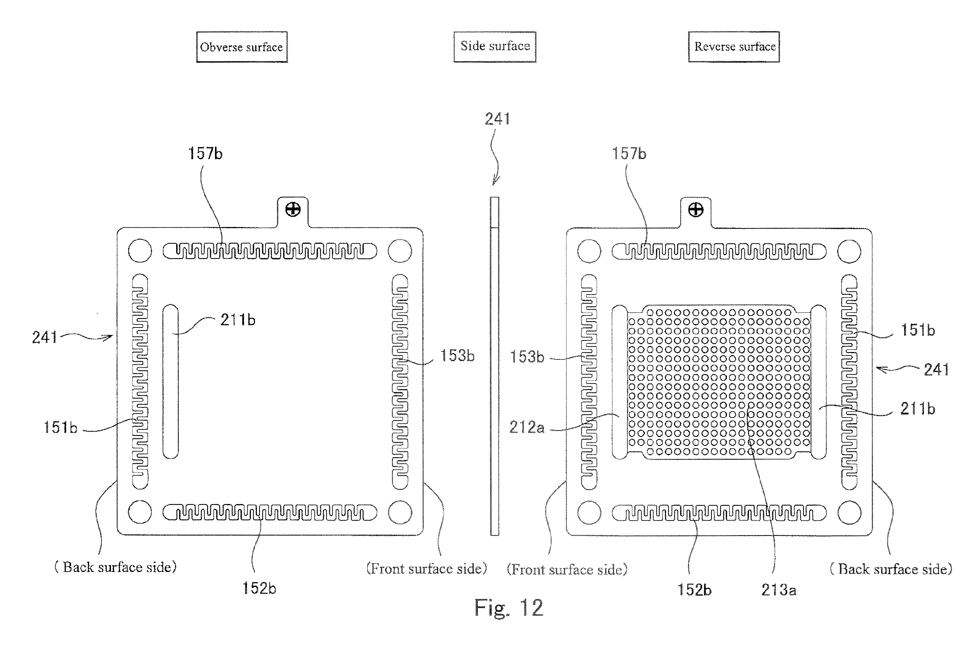

As described above, the air or the fluids (raw material and reforming water) flow through the preheating manifolds and thereby deprive the heat from the SOFC stack 50 to cool the SOFC stack 50. By comparison, the air or the raw material gain the heat from the SOFC stack 50. In view of this, the shape of the preheating manifolds is suitably, for example, an opening shape (comb-shape) provided with a plurality of projections like the cathode end interconnector 241 of Fig. 12 placed adjacent to the outer end header 15, so as to have a structure for increasing a contact area in which the preheating manifolds contact the fluid (air or raw material). That is, the structure for increasing the contact area as such a comb shape is preferable so long as it will not cause a significant increase in a pressure loss.

In a range from the outer end header 15 to the reformer 40, the cathode end interconnector 241, the plurality of SOFCs 20, ..., the plurality of interconnectors 24, ..., the anode end interconnector 242, and the reformer connection header 16 are arranged and stacked in this order. The four preheating manifolds are provided in the corresponding locations of the respective members. In a state in which these members are stacked together, through-holes extending in which they are stacked together are formed.

As shown in Fig. 11, in a lower portion of the raw material preheating manifold 157a, the vaporizer 41 composed of, for example, steel wool, foamed metal, etc.., is provided. The humidified raw material containing the reforming water vaporized by the vaporizer 41 flows through the raw material preheating manifolds 157 in another members stacked together, from the outer end header 15 to the reformer 40.

In the same manner, the first air preheating manifolds 151, the second air preheating manifolds 152, and the third air preheating manifold 153 form through-holes extending in the direction in which another members are stacked together, in a state in which another members are stacked together, from the outer end header 15 to the reformer 40. The air is guided through the through-holes before it is supplied to the cathodes 21. The air is preheated by the heat owned by the SOFC 20 and deprives the heat from the SOFCs 20 to cool the SOFCs 20.

As shown in Fig. 11, on an upper surface side of the second air preheating manifold 152a, the first turn portion 154 is formed to have a shape in which it extends in the same direction as that of the second air preheating manifold 152a, and one end thereof is joined to an end portion of the first air preheating manifold 151a. As described above, the first turn portion 154 is joined at one end thereof to the first air preheating manifold 151a and joined at the side portion of the bottom surface side to the second air preheating manifold 152a. The first turn portion 154 is able to guide the air having flowed through the first air preheating manifold 151, to the second air preheating manifolds 152. The first turn portion 154 is provided with a plurality of heat exchange fins arranged horizontally.

In a region which is a substantially center portion of the outer end header 15, which region is surrounded by the four manifolds, the third turn portion 156 is formed. The third turn portion 156 connects the third air preheating manifold 153a to a cathode entrance manifold 211a. The third turn portion 156 is able to guide the air having flowed through the third air preheating manifold 153a to the cathode entrance manifold 211a. The third turn portion 156 is provided with a plurality of heat exchange fins arranged horizontally.

(**Structure of cathode end interconnector**)

Next, a structure of the cathode end interconnector 241 placed adjacently to the outer end header 15 will be described with reference to Fig. 12. Fig. 12 is a view showing an example of an obverse surface, a side surface and a reverse surface of the cathode end interconnector 241 constituting the SOFC hot module 100 according the present embodiment.

As shown in Fig. 12, the cathode end interconnector 241 also serves as a current collecting member and is provided on its upper surface with a positive electrode. To enable the cathode end interconnector 241 to also serve as the current collecting member in this way, the cathode end interconnector 241 is designed so that a thickness of a side surface is greater than that of the normal interconnector 24 (e.g., see Fig. 7).

On a peripheral portion of the obverse surface of the cathode end interconnector 241, like the outer end header 15, there are formed manifolds (first air preheating manifold 151b, second air preheating manifold 152b, third air preheating manifold 153b, and raw material preheating manifold 157b). As described above, these manifolds are provided as through holes formed in locations corresponding to those of the manifolds provided in the outer end header 15 in a state in which the cathode end interconnector 241 and the outer end header 15 are stacked together such that they have the same shapes and penetrate to the reverse surface.

In addition, a cathode entrance manifold 211b is formed such that it is placed inward relative to the four manifolds enclosing the outer periphery, is located in the vicinity of the first air preheating manifold 151b, and extends substantially in parallel with the first air preheating manifold 151b. The cathode entrance manifold 211b penetrates from the obverse surface of the cathode end interconnector 241 to the reverse surface of the cathode end interconnector 241.

On an outer peripheral portion of the reverse surface of the cathode end interconnector 241, like the obverse surface, there are formed a first air preheating manifold 151b, a second air preheating manifold 152b, a third air preheating manifold 153b, and a raw material preheating manifold 157b. In addition, like the obverse surface, the cathode entrance manifold 211b is provided. Furthermore, on the reverse surface, a cathode exit manifold 212a is provided in the vicinity of a third air preheating manifold 153b such that it extends substantially in parallel with the third air preheating manifold 153b. As shown in Fig. 12, the cathode exit manifold 212a is provided in a location opposed to the cathode entrance manifold 211 b. Between the cathode exit manifold 212a and the cathode entrance manifold 211 b, a cathode passage 213a formed by a number of pores is provided.

(**Structure of SOFC**)

Next, a structure of the SOFC 20 placed adjacently to the cathode end interconnector 241 will be described with reference to Fig. 13. Fig. 13 is a view showing an example of an obverse surface, a side surface and a reverse surface of SOFC 20 constituting the SOFC hot module 100 according the present embodiment.

As shown in Fig. 13, the SOFC 20 includes the cathode 21 on the obverse surface and the anode 22 on the reverse surface such that an electrolyte is sandwiched between the cathode 21 and the anode 22. The cathode 21 and the anode 22 implement the heat generation section of the present invention. On an outer peripheral portion of the obverse surface of the SOFC 20, there are formed a first air preheating manifold 151c, a second air preheating manifold 152-c, a third air preheating manifold 153c, and a raw material preheating manifolds 157c, like the cathode end interconnector 241 (see Fig. 12) adjacent to the SOFC 20. These manifolds are formed as through-holes in locations corresponding to those of the manifolds formed in the cathode end interconnector 241 adjacent to the SOFC 20 in a state in which the SOFC 20 and the cathode end interconnector 241 are stacked together such that they have the same shapes and penetrate to the reverse surface.

As shown in Fig. 13, the SOFC 20 is provided with a cathode entrance manifold 211c and a cathode exit manifold 212b as through-holes formed in locations corresponding to those of the cathode entrance manifold 211b and the cathode exit manifold 212a formed on the reverse surface of the cathode end interconnector 241 (see Fig. 12) in a state in which the SOFC 20 and the cathode end interconnector 241 are stacked together such that they have the same shapes and penetrate to the reverse surface.

In the vicinity of the second air preheating manifold 152c, an anode entrance manifold 221a is formed to extend substantially in parallel with the second air preheating manifold 152c. The anode entrance manifold 221a penetrates from the obverse surface to the reverse surface. In the vicinity of the raw material preheating manifold 157c, an anode exit manifold 222a is formed to extend substantially in parallel with the raw material preheating manifold 157c. The anode exit manifold 222a penetrates from the obverse surface to the reverse surface.

As shown in Fig. 13, on the obverse surface of the SOFC 20, a cathode entrance manifold 211c and a cathode exit manifold 212b are placed at opposed locations with respect to the cathode 21 in a horizontal direction. In addition, on the obverse surface of the SOFC 20, the anode entrance manifold 221a and the anode exit manifold 222a are placed at opposite locations with respect to the cathode 21 in a vertical direction.

Therefore, the supplied air flows from the cathode entrance manifold 211c toward the cathode exit manifold 212b on the obverse surface of the SOFC 20 (cathode 21). By comparison, the reformed gas (hydrogen) generated by reforming the raw material flows from the anode entrance manifold 221a toward the anode exit manifold 222a on the reverse surface of the SOFC 20. At this time, the anode 22 is supplied with the reformed gas through pores of a base plate 250.

That is, the SOFC 20 of the present embodiment is a metal-support-cell (MSC) created by forming the base plate 250 by porous metal (porous ferrite based stainless plate). For example, the SOFC 20 may be a general electrolyte-support cell (ESC) or an anode-support cell (ASC).

However, in these types, a peripheral portion is made of a very thin ceramics. It is therefore difficult to form corrugated manifolds as shown in Fig. 13, in the peripheral portion of the SOFC 20. Also, there is a fear that the peripheral portion will be damaged in a period during which the temperature is raised up to a cell operation temperature.

To avoid this, in the SOFC 20 of the present embodiment, the MSC is used as described above. The MSC is formed in such a manner that the base plate 250 is made of a porous ferrite based stainless plate (e.g., powdered sintered body manufactured by Crofer 22APU, Thyssenkrupp Co., Ltd.), and catalysts and electrolytes are stacked between the cathode 21 and the anode 22 of Fig. 7 and integrated. The above stated manifolds are processed easily on portions of the base plate 250 to have desired shape. The MSC is manufactured in such a manner that layers of catalysts and electrolytes which are several tens micrometers in thickness are formed inside of a thickness of 1mm of a base member. The overall MSC is a metal which is very high in heat conductivity, in terms of a heat property. Because of this, in a configuration in which the heat generating section is present inside of the SOFC 20, the heat can be transferred efficiently to the overall SOFC 20. Even in a case where a cooling structure (heat exchange structure) is present only in the outer peripheral portion of the SOFC 20, the overall SOFC 20 can be suitably cooled.

(**Structure of interconnector**)

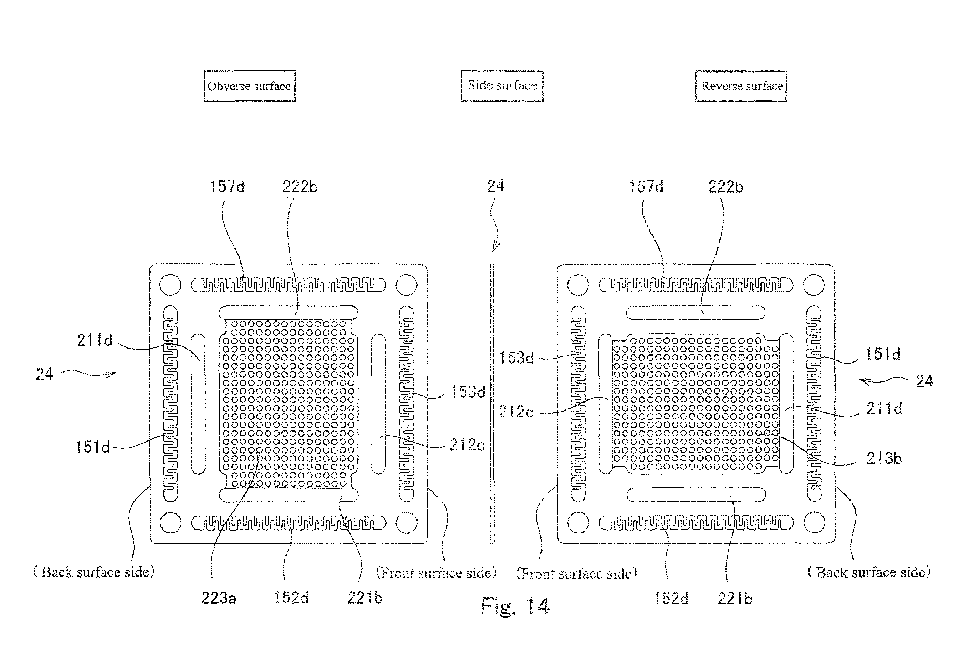

Next, a structure of the interconnector 24 placed adjacently to the SOFC 20 will be described with reference to Fig. 14. Fig. 14 is a view showing an example of an obverse surface, a side surface and a reverse surface of the interconnector 24 constituting the SOFC hot module 100 according the present embodiment.

As shown in Fig. 14, like the SOFC 20 (see Fig. 13) adjacent to the interconnector 24, there are formed a first air preheating manifolds 151d, a second air preheating manifold 152d, a third air preheating manifold 153d, and a raw material preheating manifolds 157d. These manifolds are formed as through-holes in locations corresponding to those of the manifolds formed in the outer peripheral portion of the SOFC 20 adjacent to the interconnector 24 in a state in which the SOFC 20 and the interconnector 24 are stacked together such that they have the same shapes and penetrate to the reverse surface.

Like the SOFC 20, there are formed a cathode entrance manifold 211d, a cathode exit manifold 212c, an anode entrance manifold 221b and an anode exit manifold 222b.

On the obverse surface of the interconnector 24, in a region surrounded by the cathode entrance manifold 211d, the cathode exit manifold 212c, the anode entrance manifold 221b, and the anode exit manifold 222b, an anode passage 223a composed of a plurality of pores is formed. The anode passage 223a is configured such that the pores are continuous from the anode entrance manifold 221b to the anode exit manifold 222b.

On the reverse surface of the interconnector 24, in a region surrounded by the cathode entrance manifold 211d, the cathode exit manifold 212c, the anode entrance manifold 221b, and the anode exit manifold 222b, a cathode passage 213b composed of a plurality of pores is formed. The cathode passage 213b is configured such that the pores are continuous from the cathode entrance manifold 211c to the cathode exit manifold 212C.

(**Structure of anode end interconnector**)

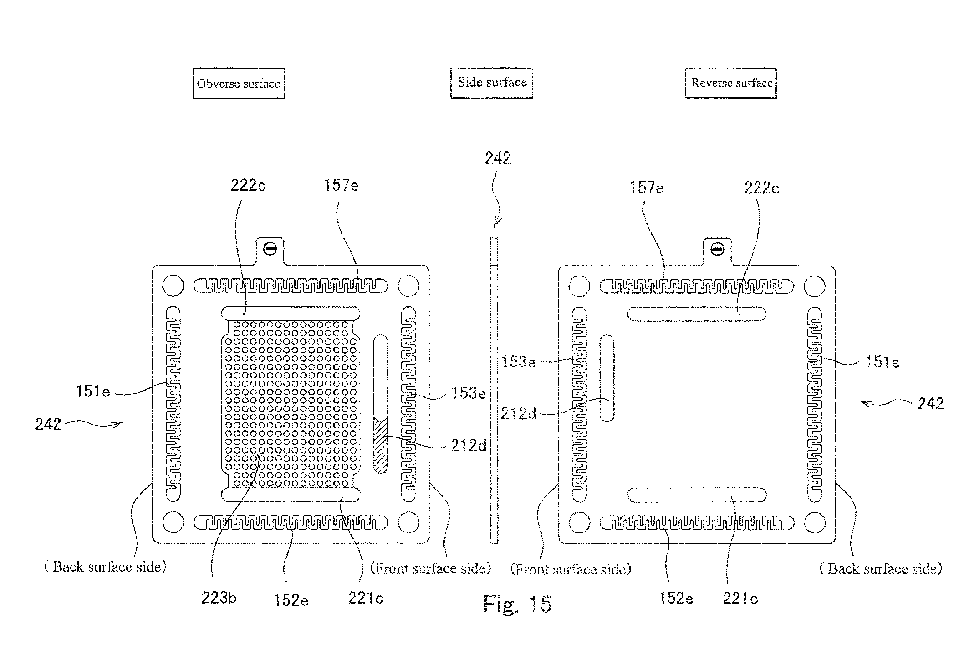

A structure of the anode end interconnector 242 placed at an anode-side terminal end portion of the SOFC stack 50 will be described with reference to Fig. 15. Fig. 15 is a view showing an example of an obverse surface, a side surface and a reverse surface of the anode end interconnector 242 constituting the SOFC hot module 100 according the present embodiment.

As shown in Fig. 15, the anode end interconnector 242 is provided on an upper surface with as a negative current collecting terminal member. To enable the anode end interconnector 242 to also serve as the current collecting member, like the cathode end interconnector 241, the anode end interconnector 242 is designed so that its thickness is greater than that of the interconnector 24 (e.g., see Fig. 7).

On the outer peripheral portion of the anode end interconnector 242, there are formed a first air preheating manifold 151e, a second air preheating manifold 152e, a third air preheating manifold 153e, and a raw material preheating manifold 157e such that these manifolds penetrate to the reverse surface. These manifolds are formed as through-holes in locations corresponding to those of the first air preheating manifold 151c, the second air preheating manifold 152c, the third air preheating manifold 153c, and the raw material preheating manifold 157c formed in the SOFC 20 (see Fig. 13) adjacent to the anode end interconnector 242 in a state in which the SOFC 20 and the anode end interconnector 242 are stacked together such that they have the same shapes and penetrate to the reverse surface.

In addition, there are formed an anode entrance manifold 221c and an anode exit manifold 222c in locations corresponding to those of the anode entrance manifold 221a and the anode exit manifold 222a of the SOFC 20 adjacent to the anode end interconnector 242 in a state in which the SOFC 20 and the anode end interconnector 242 are stacked together. These manifolds have the same shapes as those of the anode entrance manifold 221a and the anode exit manifold 222a, and penetrate from the obverse surface of the anode end interconnector 242 to the reverse surface of the anode end interconnector 242.

Furthermore, in the location corresponding to that of the cathode exit manifold 212b of the SOFC 20 adjacent to the anode end interconnector 242 in a state in which the SOFC 20 and the anode end interconnector 242 are stacked together, there is formed a cathode exit manifold 212d having the same shape as that of the cathode exit manifold 212b. Note that as shown in Fig. 15, the cathode exit manifold 212d penetrates from the obverse surface to the reverse surface in a range of a substantially upper half portion thereof, but does not penetrate from the obverse surface to the reverse surface in a range of a substantially lower half portion thereof such that it forms a groove (counter boring). This is because in the reformer connection header 16 placed following the cathode end interconnector 242, the off-gas manifold 270 (see Fig. 16 as will be described later) as will be described later is formed in a location corresponding to that of the substantially lower half portion thereof in a state in which the SOFC 20 and the anode end interconnector 242 are stacked together. Therefore, in the anode end interconnector 242, the cathode-off-gas is supplied to the combustion section 30 only from the penetrating portion of the cathode exit manifold 212d.

(**Structure of reformer connection header**)

Next, a structure of the reformer connection header 16 placed adjacently to the anode end interconnector 242 will be described with reference to Fig. 16. Fig. 16 is a view showing an example of an obverse surface, a side surfaces and a reverse surface of the reformer connection header 16 constituting the SOFC hot module 100 according the present embodiment.

As described above with reference to Fig. 7, for example, the reformer connection header 16 is a stack member for connecting the SOFC stack 50 to the reformer 40. As shown Fig. 16, the reformer connection header 16 is provided with an air inlet 62 on a back side surface thereof. The air supplied from the air inlet 62 flows through the first air preheating manifold 151 penetrating toward the outer end header 15, and is preheated by heat of the SOFC 20 while flowing through the first air preheating manifold 151.

On the outer peripheral portion of the obverse surface of the reformer connection header 16, there are formed a first air preheating manifold 151f, a second air preheating manifold 152f a second turn portion 155, and a raw material preheating manifold (humidified raw material supply hole) 157f.

In a location corresponding to that of the first air preheating manifold 151e of the anode end interconnector 242 (see Fig. 15) adjacent to the reformer connection header 16 in the state in which the anode end interconnector 242 and the reformer connection header 16 are stacked together, the first air preheating manifold 151f having the same shape as that of the first air preheating manifold 151e is formed. In a location corresponding to that of the second air preheating manifold 152e of the anode end interconnector 242 in a state in which the anode end interconnector 242 and the reformer connection header 16 are stacked together, the second air preheating manifold 152f having substantially the same shape is formed. Furthermore, in a location corresponding to that of the third air preheating manifold 153e of the anode end interconnector 242 in a state in which the anode end interconnector 242 and the reformer connection header 16 are stacked together, the second turn portion 155 having substantially the same shape is formed. An end portion of the second turn portion 155 and an end portion of the second air preheating manifold 152f are joined together. Because of this, the air having flowed through the second air preheating manifold 152f is guided to the third air preheating manifold 153e of the anode end interconnector 242 via the second turn portion 155.

In a location corresponding to that of the raw material preheating manifold 157e of the anode end interconnector 242 in a state in which the anode end interconnector 242 and the reformer connection header 16 are stacked together, the raw material preheating manifold 157f having the same shape is formed.

In the reformer connection header 16, only the raw material preheating manifold 157f penetrates from the obverse surface to the reverse surface, of the manifolds and the second turn portion 155 provided on the outer peripheral portion.

In the reformer connection header 16, in locations corresponding to those of the anode entrance manifold 221c and the anode exit manifold 222c of the anode end interconnector 242 in a state in which the anode end interconnector 242 and the reformer connection header 16 are stacked together, there are formed an anode entrance manifold (reformed gas supply hole) 221d and an anode exit manifold 222d having the same shapes. Only the anode entrance manifold 221d penetrates to the reverse surface to receive the fuel gas generated through the reforming reaction from the reformer 40.

In a location corresponding to that of the penetrating portion of the cathode exit manifold 212d of the anode end interconnector 242 in a state in which the anode end interconnector 242 and the reformer connection header 16 are stacked together, there is formed a cathode exit manifold 212e having the same shape as that of the penetrating portion. In a location corresponding to that of the non-penetrating portion of the cathode exit manifold 212d of the anode end interconnector 242 in a state in which the anode end interconnector 242 and the reformer connection header 16 are stacked together, there is formed an off-gas manifold 270 penetrating to the reverse surface.

The anode exit manifold 222d, the cathode exit manifold 212e, and the off-gas manifold 270 are connected together via an off-gas mixing section 260 provided in a center portion of the reformer connection header 16. An anode-off-gas exhausted from the anode exit manifold 222d and the cathode-off-gas exhausted from the cathode exit manifold 212d are mixed in the off-gas mixing section 260, and the resulting mixture gas is exhausted to the combustion section 30 via the off-gas manifold 270.

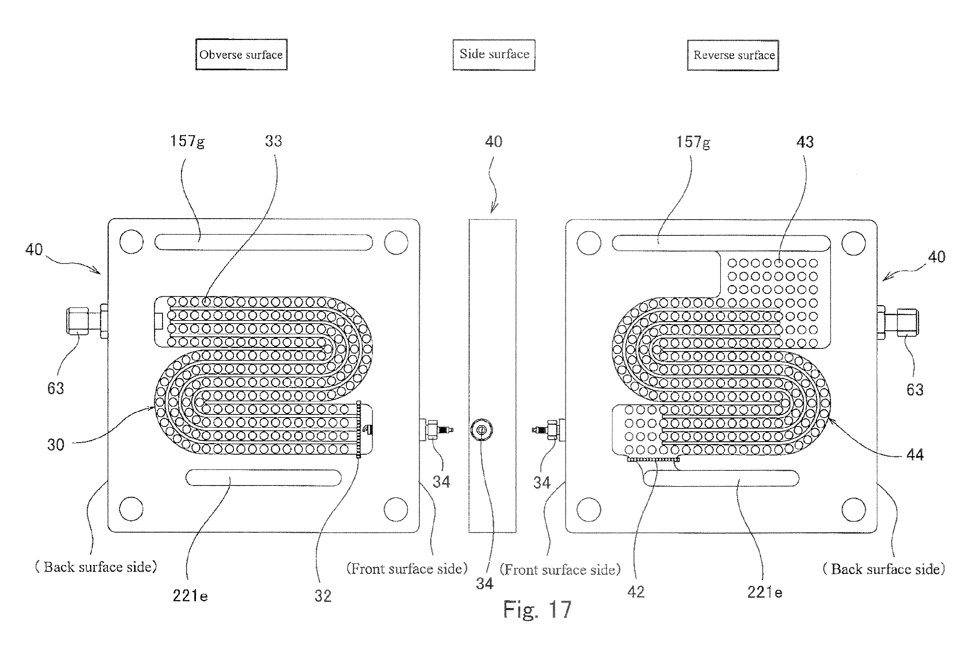

As will be described in detail later, to prevent a flame ignited by an igniter 34 inside of the reformer 40 of Fig. 17 from spreading to inside of the SOFC stack 50, a backfire preventing member 261 is provided between the anode exit manifold 222d and the off-gas mixing section 260, and a backfire preventing member 262 is provided between the off-gas manifold 270 and the off-gas mixing section 260. The backfire preventing member 261 is implemented by a backfire preventing net such as a metal net, or a punching metal.


(**Structure of reformer**)

Next, a structure of the reformer 40 placed adjacently to the reformer connection header 16 will be described with reference to Fig. 17. Fig. 17 is a view showing an example of an obverse surface, a side surface and a reverse surface of the reformer 40 constituting the SOFC hot module 100 according the present embodiment.

As shown in Fig. 17, on a cathode side of a side surface of a front surface side of the reformer 40, the igniter 34 which is an electronically-controlled ignition device is provided instead of the burner 31. In addition, on a cathode side of a side surface of a back surface side of the reformer 40, the exhaust port 63 is provided to exhaust an exhaust gas from inside of the SOFC hot module 100 to outside.

On the obverse surface side of the reformer. 40, the combustion section 30 is provided. On the reverse surface side of the reformer 40, a reforming reaction proceeds by combustion heat from the combustion section 30. As shown in Fig. 17, on the obverse surface side of the reformer 40, on an outer peripheral portion at an upper surface side thereof, i.e., in a location corresponding to the raw material preheating manifold 157f (see Fig. 16) of the reformer connection header 16 adjacent to the reformer 40 in a state in which the reformer connection header 16 and the reformer 40 are stacked together, there is formed a raw material preheating manifold 157g penetrating to the reverse surface. On an outer peripheral portion of a lower portion of the obverse surface of the reformer 40, i.e., in a location corresponding to that of the anode entrance manifold 221d of the reformer connection header 16 in a state in which the reformer connection header 16 and the reformer 40 are stacked together, there is formed an anode entrance manifold (reformed gas exhaust hole) 221e penetrating to the reverse surface.

As shown in Fig. 17, the raw material preheating manifold 157g and the anode entrance manifold (reformed gas exhaust hole) 221e extend horizontally in parallel between the front surface side and the back surface side of the reformer 40. Between the raw material preheating manifold 157g and the anode entrance manifold 221e, there are provided a plurality of combustion catalysts 33 arranged in an inverted-S shape when viewed from the obverse surface. At a right end portion (front surface side) in Fig. 17, in a portion where the combustion catalysts 33 are placed, a combustion catalyst holding member 32 for securing these combustion catalysts 33 is provided.

The combustion section 30 is configured in such a manner that the igniter 34 ignites a reformed mixture gas (anode-off-gas cathode-off-gas) exhausted from the off-gas manifold 270 (see Fig. 16) of the reformer connection header 16 adjacent to the reformer 40, to heat the combustion catalysts 33.

On the reverse surface of the reformer 40, reforming catalysts 43 are arranged in a substantially-S shape from the raw material preheating manifold 157g to the anode entrance manifold 221e, and constitute the reforming section 44. In a boundary portion between the reformer 44 and the anode entrance manifold 221e, there is provided a reforming catalyst holding member 42 to prevent the reforming catalysts 43 from migrating and clogging the anode entrance manifold 221e. The reforming catalyst holding member 42 is implemented by, for example, a punching metal, etc..

That is, the raw material supplied through the raw material preheating manifold 157g is generated into hydrogen through the reforming reaction in a reforming section 44 heated, and guided as the reformed gas to the anode 22 of the SOFC 20 of the SOFC stack 50 via the anode entrance manifold 221e.

Typically, as these manifolds, only reaction gas passages (manifolds) such as the cathode entrance manifold 211, the cathode exit manifold 212, the anode entrance manifold 221 and the anode exit manifold 222 are provided inside of the SOFC stack 50. However, in the SOFC hot module 100 of the present embodiment, as described above, on an outer peripheral portion which is outward relative to these manifolds, the plurality of air preheating manifolds (the first air preheating manifold 151, the second air preheating manifold 152, and the third air preheating manifold 153) and the raw material preheating manifold 157 are provided. The air or the raw material flows through the preheating manifolds and thereby deprives the heat from the SOFC stack 50. The air or the raw material is heated by the heat owned by the SOFC stack 50.

(**Operation associated with reforming reaction**)

Next, an operation associated with the reforming reaction in the reformer 40 will be described in greater detail. The reformer connection header 16 and the reformer 40 which are placed adjacently are mechanically connected to each other by fastening using the fastener member 60. As described above, the reformed mixture gas (anode-off-gas and cathode-off-gas) exhausted from the off-gas manifold 270 of the reformer connection header 16 is supplied to the combustion section 30 of the reformer 40. The humidified raw material exhausted from the raw material preheating manifold 157f of the reformer connection header 16, is supplied to the reforming section 44 via the raw material preheating manifold 157g of the reformer 40 (see Fig. 17).

As shown in Fig. 17, the reformer 40 is one kind of heat exchanger as a whole, in which the combustion section 30 and the reforming section 44 are placed with a thin separating wall between them. The reformer 40 is configured to conduct reforming in the reforming section 44 on the opposed surface by utilizing a combustion energy of the reformed mixture gas generated by the combustion in the combustion section 30.

The reformed mixture gas introduced through a lower end of the combustion section 30 is ignited by the igniter 34 and introduced into the combustion catalysts 33 inside of the combustion section at start of the operation of the SOFC. Note that this ignition operation becomes unnecessary at a time point when a reformer temperature is stabilized and catalytic combustion starts automatically.

The reformed mixture gas is combusted continuously in the combustion section 30, and the resulting combustion heat is supplied to the reforming section 44 on the opposed surface (reverse surface). An exhaust gas of the reformed mixture gas is discarded through the exhaust port 63 provided on the back surface side of the SOFC hot module 100 in a location corresponding to the upper end portion of the combustion section 30.

The humidified raw material introduced to the upper end side of the reforming section 44 via the raw material preheating manifold 157g goes through the steam reforming continuously on the reforming catalysts 43 and is generated into hydrogen. The generated hydrogen is supplied as the reformed gas to the reformer connection header 16 via the anode entrance manifold 221e. A flow of the reformed gas which occurs thereafter has already been described.

The reformer connection header 16 and the reformer 40 shown in Figs. 16 and 17 can be manufactured easily by grinding a metal block. Or, the reformer connection header 16 and the reformer 40 can be manufactured easily by a powder metallurgical technology for pressurizing and sintering metal powder. In the case of mass production of the reformer connection header 16 and the reformer 40 in view of manufacturing cost, the latter manufacturing method is preferable. The outer end header 15, the cathode end interconnector 241, the interconnector 24, and the anode end interconnector 242, which are the other stack members, are manufactured as in the reformer connection header 16 and the reformer 40.

The reformer connection header 16 and the reformer 40 shown in Figs. 16 and 17 have relatively great contact surfaces, which enables direct heat transmission from the reformer connection header 16 to the reformer 40. This leads to utilization of the waste heat resulting from the power generation in the SOFC 20 as the reforming energy, and further reduction of excessive air, which makes it easier to supply the water in a self-sustainable manner.

Hereinafter, a principle in which the water can be supplied in a self-sustainable manner in the SOFC hot module 100 according to the present embodiment will be described.

(**Self-sustainable supply of water**)

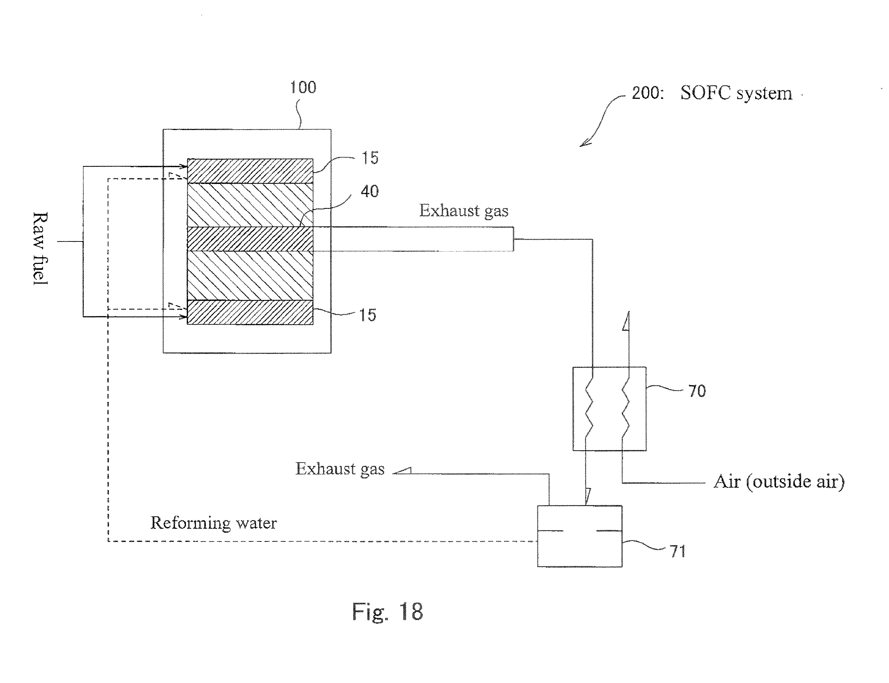

Prior to explaining the principle in which water can be supplied in a self-sustainable manner, a configuration of a SOFC system 200 which includes the SOFC hot module 100 and can utilize condensed water generated from the exhaust gas as the reforming water will be described with reference to Fig. 18. Fig. 18 is a view schematically showing an example of a configuration of the SOFC system 200 according the present embodiment.

As shown in Fig. 18, the SOFC system 200 according the present embodiment is configured to further include a condensation heat exchanger 70 and a drain tank 71 in addition to the above stated SOFC hot module 100. The SOFC system 200 is configured in such a manner that the condensation heat exchanger 70 exchanges heat between the exhaust gas exhausted from the SOFC hot module 100 and the air, to cool the exhaust gas to generate the condensed water, which is stored in the drain tank 71. The condensed water stored in the drain tank 71 is utilized as the reforming water in the SOFC hot module 100.

The SOFC system 200 according the present embodiment can gain the condensed water of a required amount as the reformed water from the exhaust gas cooled by the heat exchange in the condensation heat exchanger 70 based on a principle described below.

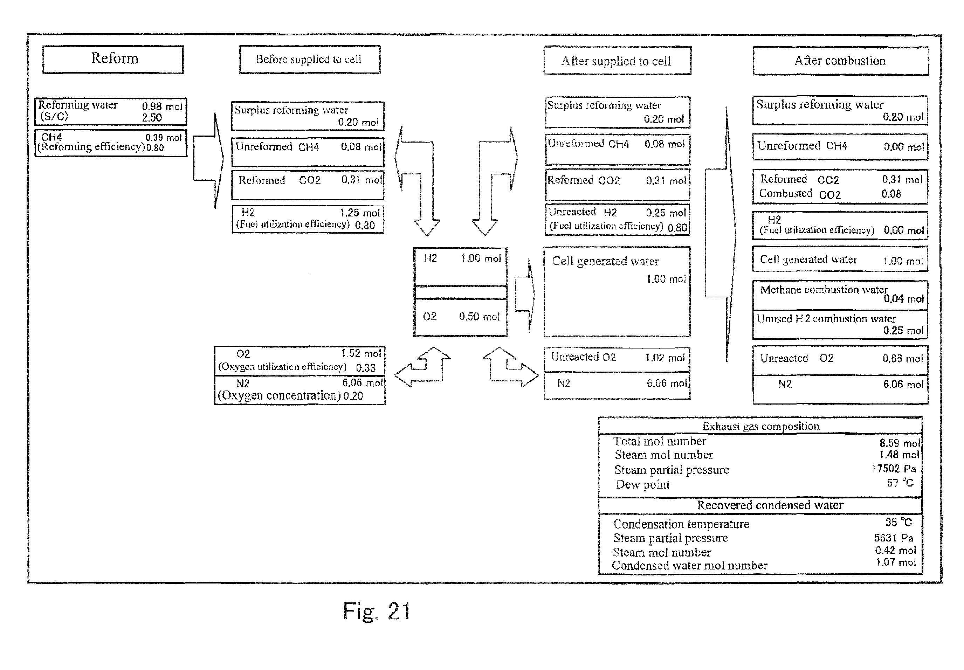

Hereinafter, the principle in which water can be supplied in a self-sustainable manner will be described, with reference to supply and generation of substances in Figs. 19 to 21. Figs. 19 to 21 are views showing an example of supply and generation of substances in a reforming efficiency and a fuel/oxygen utilization efficiency, in a cell reaction in which water of 1 mol is generated from hydrogen of I mol and oxygen of 0.5 mol. Fig. 19 shows the relationships of the supply and generation of substances in a case where the oxygen utilization ratio Uo = 0.2, Fig. 20 shows the relationships of the supply and generation of substances in a case where the oxygen utilization ratio Uo = 0.3, and Fig. 21 shows the relationships of the supply and generation of substances in a case where the oxygen utilization ratio Uo = 0.33.

When a combustion energy of hydrogen of a flow rate 1.0mol/min is expressed as a work amount, this is 4129W. Therefore, a power generation amount of the fuel cell operated with a power generation efficiency of 60% by consuming hydrogen of a flow rate 1.0mol/min and oxygen of a flow rate 0.5mol/min is $4129 \times 0.6 = 2477W$. In this case, a heat generation amount is $4129 \times 0.4 = 1651$ W. That is, the SOFC system 200 is required to be operated while removing the heat of 1651W to keep a cell temperature at a constant temperature.

As can be clearly seen from Fig. 19, in a case where the raw material is methane ($CH_4$) and S/C = 2.5, the reforming water of 0.98mol per consumed hydrogen of 1 mol is required. When vaporization heat of the water of 0.98mol/min is expressed as a work amount, this is 664W.

As descried above, in the conventional configuration, to remove the heat of 1651W, a fuel cell apparatus was operated while cooling the SOFC with the air which was five times (Uo = 0.2) as much as sctoichiometry. In the conventional configuration, the condensed water generated by cooling the exhaust gas at an outside air temperature of 35 degrees C in summer season which is assumed normally is 0.78mol/min. Therefore, the reforming water of 0.98mol/min cannot be covered.

On the other hand, in the fuel cell of the present embodiment, 664W (40%) of 1651 W can be consumed as the vaporization heat of the water. An amount of heat to be cooled by the air is 60% of the above, i.e., three times (Uo = 0.33) as much as stoichiometry. Supply and generation of the substances in this case are shown in Fig. 21. When the exhaust gas is cooled at an outside air temperature of 35 degrees in summer season which is assumed normally, condensed water of 1.07mol/min can be generated. That is, the generated condensed water can cover the reforming water of 0.98mol/min which is a required amount. As a result, the fuel cell apparatus of the present embodiment is able to gain the condensed water of a required amount as the reforming water by cooling the exhaust gas with the air in a range of the outside air temperature which is assumed normally. That is, the fuel cell apparatus of the present embodiment is able to supply the water in a self-sustainable manner.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

**Industrial Applicability**

A high-temperature operating fuel cell module and a high-temperature operating fuel cell system of the present invention are useful as a high-temperature operating fuel cell module, etc., which can improve a utilization efficiency of air supplied.

**Reference Signs List**

| | |
|---|---|
| 9 | air outlet |
| 10 | air preheating section |
| 11 | first heat exchanger section |
| 12 | second heat exchanger section |
| 13 | supply header |
| 14 | discharge header |
| 15 | outer end header |
| 16 | reformer connection header |

| 17 | third heat exchanger section |
| 18 | fourth heat exchanger section |
| 19 | fifth heat exchanger section |
| 20 | SOFC |
| 21 | cathode |
| 22 | anode |
| 23 | electrolyte |
| 24 | interconnector |
| 25 | base pipe member |
| 30 | combustion section |
| 31 | burner |
| 32 | combustion catalyst holding member |
| 33 | combustion catalyst |
| 34 | igniter |
| 40 | reformer |
| 41 | vaporizer |
| 42 | reforming catalyst holding member |
| 43 | reforming catalyst |
| 44 | reforming section |
| 45 | reformed gas inlet |
| 50 | SOFC stack |
| 60 | fastener member |
| 61 | raw material inlet |
| 62 | air inlet |
| 63 | exhaust port |
| 70 | condensed water heat exchanger |
| 71 | drain tank |
| 100 | SOFC hot module |
| 151 | first air preheating manifold |
| 151a | first air preheating manifold |
| 151b | first air preheating manifold |
| 151c | first air preheating manifold |
| 151d | first air preheating manifold |
| 151e | first air preheating manifold |
| 151f | first air preheating manifold |
| 152 | second air preheating manifold |
| 152a | second air preheating manifold |
| 152b | second air preheating manifold |
| 152c | second air preheating manifold |
| 152d | second air preheating manifold |
| 152e | second air preheating manifold |
| 152f | second air preheating manifold |
| 153 | third air preheating manifold |
| 153a | third air preheating manifold |
| 153b | third air preheating manifold |
| 153c | third air preheating manifold |
| 153d | third air preheating manifold |
| 153e | third air preheating manifold |
| 154 | first turn portion |
| 155 | second turn portion |
| 156 | third turn portion |
| 157 | raw material preheating manifold |
| 157a | raw material preheating manifold |
| 157b | raw material preheating manifold |
| 157c | raw material preheating manifold |
| 157d | raw material preheating manifold |
| 157e | raw material preheating manifold |
| 157f | raw material preheating manifold |

157g    raw material preheating manifold
200    SOFC system
211    cathode entrance manifold
211a    cathode entrance manifold
211b    cathode entrance manifold
211c    cathode entrance manifold
212    cathode exit manifold
212a    cathode exit manifold
212b    cathode exit manifold
212c    cathode exit manifold
212d    cathode exit manifold
212e    cathode exit manifold
213a    cathode passage
213b    cathode passage
221    anode entrance manifold
221a    anode entrance manifold
221b    anode entrance manifold
221c    anode entrance manifold
221d    anode entrance manifold
221e    anode entrance manifold
222    anode exit manifold
222a    anode exit manifold
222b    anode exit manifold
222c    anode exit manifold
222d    anode exit manifold
223a    anode passage
223b    anode passage
241    cathode end interconnector
242    anode end interconnector
250    base plate
260    off-gas mixing section
261    backfire preventing member
270    off-gas manifold
1000    SOFC hot module

**Claims**

1. A high-temperature operating fuel cell module, comprising:

   a high-temperature operating fuel cell including a power generation section for generating electric power through a power generation reaction by utilizing a fuel gas and air; and
   a reformer for generating a reformed gas as the fuel gas, by using a fluid supplied to the reformer, the reformed gas being generated from the fluid;
   wherein the fluid heated by heat owned by the high-temperature operating fuel cell is supplied to the reformer.

2. The high-temperature operating fuel cell module according to Claim 1, comprising:

   a first heat exchanger section which exchanges heat between the high-temperature operating fuel cell and the air such that the air cools the high-temperature operating fuel cell and is heated by the heat of the high-temperature operating fuel cell before the air is utilized in the power generation reaction; and
   a second heat exchanger section for exchanging heat between the fluid and the air heated by the heat exchange in the first heat exchanger section such that the air heats the fluid supplied to the reformer;
   wherein the fluid heated by the heat exchange in the second heat exchanger section is supplied to the reformer, while the air from which the heat has been deprived by the heat exchange in the second heat exchanger section, is supplied to the power generation section of the high-temperature operating fuel cell.

3. The high-temperature operating fuel cell module according to Claim 2,

wherein the reformed gas generated by the reformer is utilized as the fuel gas in the power generation section of the high-temperature operating fuel cell and as a cooling medium for cooling the high-temperature operating fuel cell.

4. The high-temperature operating fuel cell module according to Claim 2 or 3, further comprising:

a third heat exchanger section for exchanging heat between the air, from which the heat has been deprived by the heat exchange in the second heat exchanger section, and the high-temperature operating fuel cell such that the high-temperature operating fuel cell is cooled by the air; and
a fourth heat exchanger section for exchanging heat between the air heated by the heat exchange in the third heat exchanger section and the fluid;
wherein the fluid heated by the heat exchange in the second heat exchanger section and in the fourth heat exchanger section is supplied to the reformer, and the air, from which the heat has been deprived by the heat exchange in the fourth heat exchanger section is supplied to the power generation section of the high-temperature operating fuel cell to be utilized as an oxidizing agent and as a cooling medium for cooling the high-temperature operating fuel cell.

5. The high-temperature operating fuel cell module according to Claim 4, further comprising:

a fifth heat exchanger section for exchanging heat between the fluid heated by the heat exchange in the second heat exchanger section and in the fourth heat exchanger section, and the high-temperature operating fuel cell such that the fluid is heated and the high-temperature operating fuel cell is cooled, before the fluid heated by the heat exchange in the second heat exchanger section and in the fourth heat exchanger section is supplied to the reformer.

6. The high-temperature operating fuel cell module according to Claim 5, further comprising:

a stacked flat plate type cell stack including a plurality of high-temperature operating fuel cells and a plurality interconnectors which are stacked together such that the plurality of high-temperature operating fuel cells and the plurality interconnectors are arranged alternately;
a raw material supply layer placed at one end portion of the stacked flat plate type cell stack to supply the fluid to the stacked flat plate type cell stack; and
a reformer connection layer placed at the other end portion of the stacked flat plate type cell stack and between the stacked flat plate type cell stack and the reformer to connect the stacked flat plate type cell stack and the reformer to each other;
wherein the raw material supply layer includes the second heat exchanger section and the fourth heat exchanger section and generates a humidified raw material by the heat exchange between the air and the fluid in the second heat exchanger section and in the fourth heat exchanger section; and
wherein the reformer connection layer supplies the air to the stacked flat plate type cell stack and supplies the humidified raw material generated in the raw material supply layer to the reformer.

7. The high-temperature operating fuel cell module according to Claim 6,
wherein the stacked flat plate type cell stack has on an outer peripheral portion a first air passage through which the air flows, as the first heat exchanger section which exchanges heat between the supplied air and the high-temperature operating fuel cell.

8. The high-temperature operating fuel cell module according to Claim 6 or 7,
wherein the stacked flat plate type cell stack has on an outer peripheral portion a second air passage through which the air flows, as a third heat exchanger section for exchanging heat between the air, from which the heat has been deprived by the heat exchange in the second heat exchanger section, and the high-temperature operating fuel cell.

9. The high-temperature operating fuel cell module according to any one of Claims 6 to 8, wherein the stacked flat plate type cell stack has on an outer peripheral portion a raw material passage through which the fluid flows, as a fifth heat exchanger section for exchanging heat between the fluid heated by the heat exchange in the second heat exchanger section and in the fourth heat exchanger section, and the high-temperature operating fuel cell.

10. The high-temperature operating fuel cell module according to any one of Claims 6 to 9,
wherein the stacked flat plate type cell stack includes an exhaust pipe which guides a combustion exhaust gas resulting from a power generation reaction in the power generation section to the reformer; and

wherein the reformer utilizes combustion heat generated by combustion of the combustion exhaust gas guided through the exhaust pipe, in a reforming reaction,

11. The high-temperature operating fuel cell module according to Claim 10,
   wherein the high-temperature operating fuel cell is a metal support high-temperature operating fuel cell in which an anode, an electrolyte, and a cathode are provided on a metal base plate as a support member; and
   wherein the metal base plate of the high-temperature operating fuel cell is provided with through-holes defining portions of the first air passage, the second air passage and the raw material passage, respectively, in the stacked flat plate type cell stack,

12. The high-temperature operating fuel cell module according to Claim 10 or 11,
   wherein the reformer connection layer includes:

   a humidified raw material supply hole as a through-hole through which a humidified raw material generated in the raw material supply layer is guided to the reformer;
   a reformed gas supply hole as a through-hole through which the reformed gas generated in the reformer is supplied to the power generation section in the stacked flat plate type cell stack; and
   a combustion exhaust gas supply hole as a through-hole through which the combustion exhaust gas guided from the power generation section in the stacked flat plate type cell stack through the exhaust pipe is supplied to the reformer;
   wherein the reformer includes:

   a humidified raw material receiving hole as a through-hole which receives the humidified raw material supplied via the humidified raw material supply hole;
   a reformed gas exhaust hole as a through-hole through which the generated reformed gas is exhausted to the reformer connection layer; and
   a combustion section for combusting the combustion exhaust gas supplied via the combustion exhaust gas supply hole to obtain heat required for the reforming reaction.

13. A high-temperature operating fuel cell module, comprising:

   a high-temperature operating fuel cell including a power generation section for generating electric power through a power generation reaction by utilizing a fuel gas and air; and
   a reformer for generating a reformed gas, by using a fluid supplied to the reformer, the reformed gas being generated from the fluid;
   wherein the high-temperature operating fuel cell module being configured in such a manner that the air is flowed through the high-temperature operating fuel cell such that the air cools the high-temperature operating fuel cell and is heated by heat of the high-temperature operating fuel cell before the air is utilized in the power generation section, the fluid supplied to the reformer is heated by heat exchange between the air heated while the air is flowed through the high-temperature operating fuel cell and the fluid, and then the air heated by the heat exchange is flowed to the high-temperature operating fuel cell such that a flow of the air is turned back to be utilized to cool the high-temperature operating fuel cell,

14. A high-temperature operating fuel cell system comprising:

   the high-temperature operating fuel cell module as recited in Claim 1 or 13; and
   a condensation heat exchanger section for exchanging heat between the exhaust gas exhausted from the high-temperature operating fuel cell module and outside air to condense a moisture contained in the exhaust gas to generate condensed water;
   wherein the condensed water generated by the condensation heat exchanger section is supplied as reforming water to the high-temperature operating fuel cell module.

Fig. 1

EP 2 763 228 A1

Fig. 2

Fig. 3

EP 2 763 228 A1

Fig. 4

EP 2 763 228 A1

Reforming water | Raw fuel

100

12 11 50

Air

21

C

19

40

A

22

20

Exhaust gas

30

Fig. 5

Fig. 6

Fig. 7

Reforming water

Raw fuel

61

34

63

62

Exhaust gas

Air

(Front surface side)

(Back surface side)

Fig. 8

Fig. 9

Fig. 10

| Obverse surface | | Side surface | | Reverse surface |

Reforming water

61

Raw fuel →

(Back surface side)

15

15

Reforming water

61

41    157a

153a

156

211a

151a

Raw fuel →

(Front surface side)    (Front surface side)

152a

154

(Back surface side)

15

Fig. 11

Fig. 12

Fig. 13

Fig. 14

| Obverse surface | | Side surface | | Reverse surface |

Fig. 15

EP 2 763 228 A1

Fig. 16

Fig. 17

Fig. 18

EP 2 763 228 A1

| Reform | Before supplied to cell | After supplied to cell | After combustion |
|---|---|---|---|

| Reforming water | 0.98 mol |
|---|---|
| (S/C) | 2.50 |

| CH4 | 0.39 mol |
|---|---|
| (Reforming efficiency) | 0.80 |

| Surplus reforming water | |
|---|---|
| | 0.20 mol |

| Unreformed CH4 | |
|---|---|
| | 0.08 mol |

| Reformed CO2 | |
|---|---|
| | 0.31 mol |

| H2 | 1.25 mol |
|---|---|
| (Fuel utilization efficiency) | 0.80 |

| Surplus reforming water | |
|---|---|
| | 0.20 mol |

| Unreformed CH4 | 0.08 mol |
|---|---|

| Reformed CO2 | 0.31 mol |
|---|---|

| Unreacted H2 | 0.25 mol |
|---|---|
| (Fuel utilization efficiency) | 0.80 |

| Surplus reforming water | |
|---|---|
| | 0.20 mol |

| Unreformed CH4 | 0.00 mol |
|---|---|

| Reformed CO2 | 0.31 mol |
|---|---|
| Combusted CO2 | 0.08 |

| H2 | |
|---|---|
| (Fuel utilization efficiency) | 0.00 mol |

| H2 | 1.00 mol |
|---|---|
| O2 | 0.50 mol |

| Cell generated water | |
|---|---|
| | 1.00 mol |

| Cell generated water | 1.00 mol |
|---|---|

| Methane combustion water | |
|---|---|
| | 0.04 mol |

| Unused H2combustion water | |
|---|---|
| | 0.25 mol |

| O2 | 2.50 mol |
|---|---|
| (Oxygen utilization efficiency) | 0.20 |
| N2 | 10.00 mol |
| (Oxygen concentration) | 0.20 |

| Unreacted O2 | 2.00 mol |
|---|---|
| N2 | 10.00 mol |

| Unreacted O2 | 1.64 mol |
|---|---|

| N2 | 10.00 mol |
|---|---|

| Exhaust gas composition | |
|---|---|
| Total mol number | 13.52 mol |
| Steam mol number | 1.48 mol |
| Steam partial pressure | 11125 Pa |
| Dew point | 48 °C |
| Recovered condensed water | |
| Condensation temperature | 35 °C |
| Steam partial pressure | 5631 Pa |
| Steam mol number | 0.71 mol |
| Condensed water mol number | 0.78 mol |

Fig. 19

| Reform | Before supplied to cell | After supplied to cell | After combustion |
|---|---|---|---|

| Reform |
|---|
| Reforming water 0.98 mol |
| (S/C) 2.50 |
| CH4 0.39 mol |
| (Reforming efficiency) 0.80 |

| Before supplied to cell |
|---|
| Surplus reforming water 0.20 mol |
| Unreformed CH4 0.08 mol |
| Reformed CO2 0.31 mol |
| H2 1.25 mol |
| (Fuel utilization efficiency) 0.80 |

| After supplied to cell |
|---|
| Surplus reforming water 0.20 mol |
| Unreformed CH4 0.08 mol |
| Reformed CO2 0.31 mol |
| Unreacted H2 0.25 mol |
| (Fuel utilization efficiency) 0.80 |

| After combustion |
|---|
| Surplus reforming water 0.20 mol |
| Unreformed CH4 0.00 mol |
| Reformed CO2 0.31 mol |
| Combusted CO2 0.08 |
| H2 (Fuel utilization efficiency) 0.00 mol |
| Cell generated water 1.00 mol |
| Methane combustion water 0.04 mol |
| Unused H2 combustion water 0.25 mol |

| H2 | 1.00 mol |
|---|---|
| O2 | 0.50 mol |

| Cell generated water 1.00 mol |
|---|

| O2 | 1.67 mol |
|---|---|
| (Oxygen utilization efficiency) | 0.30 |
| N2 | 6.67 mol |
| (Oxygen concentration) | 0.20 |

| Unreacted O2 | 1.17 mol |
|---|---|
| N2 | 6.67 mol |

| Unreacted O2 | 0.81 mol |
|---|---|
| N2 | 6.67 mol |

| Exhaust gas composition | |
|---|---|
| Total mol number | 9.35 mol |
| Steam mol number | 1.48 mol |
| Steam partial pressure | 16084 Pa |
| Dew point | 55 °C |
| Recovered condensed water | |
| Condensation temperature | 35 °C |
| Steam partial pressure | 5631 Pa |
| Steam mol number | 0.46 mol |
| Condensed water mol number | 1.02 mol |

Fig. 20

EP 2 763 228 A1

| Reform | Before supplied to cell | After supplied to cell | After combustion |
|---|---|---|---|

| Reforming water | 0.98 mol |
|---|---|
| (S/C) | 2.50 |

| CH4 | 0.39 mol |
|---|---|
| (Reforming efficiency) | 0.80 |

**Before supplied to cell**

| Surplus reforming water | |
|---|---|
| | 0.20 mol |

| Unreformed CH4 | 0.08 mol |
|---|---|

| Reformed CO2 | 0.31 mol |
|---|---|

| H2 | 1.25 mol |
|---|---|
| (Fuel utilization efficiency) | 0.80 |

| H2 | 1.00 mol |
|---|---|
| O2 | 0.50 mol |

| O2 | 1.52 mol |
|---|---|
| (Oxygen utilization efficiency) | 0.33 |
| N2 | 6.06 mol |
| (Oxygen concentration) | 0.20 |

**After supplied to cell**

| Surplus reforming water | |
|---|---|
| | 0.20 mol |

| Unreformed CH4 | 0.08 mol |
|---|---|

| Reformed CO2 | 0.31 mol |
|---|---|

| Unreacted H2 | 0.25 mol |
|---|---|
| (Fuel utilization efficiency) | 0.80 |

| Cell generated water | |
|---|---|
| | 1.00 mol |

| Unreacted O2 | 1.02 mol |
|---|---|

| N2 | 6.06 mol |
|---|---|

**After combustion**

| Surplus reforming water | |
|---|---|
| | 0.20 mol |

| Unreformed CH4 | 0.00 mol |
|---|---|

| Reformed CO2 | 0.31 mol |
|---|---|
| Combusted CO2 | 0.08 |

| H2 | |
|---|---|
| (Fuel utilization efficiency) | 0.00 mol |

| Cell generated water | 1.00 mol |
|---|---|

| Methane combustion water | 0.04 mol |
|---|---|

| Unused H2 combustion water | |
|---|---|
| | 0.25 mol |

| Unreacted O2 | 0.66 mol |
|---|---|

| N2 | 6.06 mol |
|---|---|

| Exhaust gas composition | |
|---|---|
| Total mol number | 8.59 mol |
| Steam mol number | 1.48 mol |
| Steam partial pressure | 17502 Pa |
| Dew point | 57 °C |
| Recovered condensed water | |
| Condensation temperature | 35 °C |
| Steam partial pressure | 5631 Pa |
| Steam mol number | 0.42 mol |
| Condensed water mol number | 1.07 mol |

Fig. 21

Fig. 22

Reforming water

Exhaust gas    20                    A

61

Raw fuel

63

Air

1000

62

50        A        10

Fig. 23

Fig. 24

Fig. 25

**INTERNATIONAL SEARCH REPORT**

| International application No. |
| --- |
| PCT/JP2012/005844 |

A.  CLASSIFICATION OF SUBJECT MATTER
*H01M8/04*(2006.01)i, *H01M8/02*(2006.01)i, *H01M8/06*(2006.01)i, *H01M8/12*(2006.01)i, *H01M8/24*(2006.01)i

According to International Patent Classification (IPC) or to both national classification and IPC

B.  FIELDS SEARCHED

Minimum documentation searched (classification system followed by classification symbols)
H01M8/04, H01M8/02, H01M8/06, H01M8/12, H01M8/24

Documentation searched other than minimum documentation to the extent that such documents are included in the fields searched
Jitsuyo Shinan Koho      1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y<br>A | WO 2009/028169 A1  (Mitsubishi Materials Corp.),<br>05 March 2009 (05.03.2009),<br>entire text<br>& US 2011/250513 A1 | 1<br>14<br>2-13 |
| X<br>Y<br>A | JP 2007-157479 A  (Mitsubishi Materials Corp.),<br>21 June 2007 (21.06.2007),<br>entire text<br>& US 2009/233130 A1      & EP 1976047 A1<br>& WO 2007/66618 A1 | 1<br>14<br>2-13 |
| Y | JP 2007-234374 A  (Kyocera Corp.),<br>13 September 2007 (13.09.2007),<br>entire text<br>(Family: none) | 14 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    11 December, 2012 (11.12.12) | Date of mailing of the international search report<br>    25 December, 2012 (25.12.12) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/005844 |

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2006-525631 A (Versa Power Systems, Ltd.),<br>09 November 2006 (09.11.2006),<br>entire text<br>& US 2004/224196 A1    & EP 1620909 A<br>& WO 2004/100299 A2 | 1-3,13-14<br>4-12 |
| Y<br>A | JP 2005-78859 A (Mitsubishi Heavy Industries,<br>Ltd.),<br>24 March 2005 (24.03.2005),<br>entire text<br>(Family: none) | 1-3,13-14<br>4-12 |

Form PCT/ISA/210 (continuation of second sheet) (July 2009)

**INTERNATIONAL SEARCH REPORT**

| International application No. |
| --- |
| PCT/JP2012/005844 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
(See extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**          ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/005844

Continuation of Box No.III of continuation of first sheet(2)

    In order that a group of inventions set forth in claims comply with the requirement of unity, it is required that a special technical feature for so linking the group of inventions as to form a single general inventive concept is present, but the inventions of claims 1-14 are tentatively linked with one another by only the matter set forth in claim 1. However, the afore-said matter cannot be a special technical feature, since the matter is disclosed in prior art documents, for example, the document 1: WO 2009/028169 A1 (Mitsubishi Materials Corp.), 05 March 2009 (05.03.2009), the document 2: JP 2007-157479 A (Mitsubishi Materials Corp.), 21 June 2007 (21.06.2007), and so on.
    Consequently, there is no special technical feature among a group of inventions in claims 1-14 for so linking the inventions as to form a single general inventive concept.
    Therefore, it is obvious that the group of inventions in claims 1-14 does not comply with unity of invention.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004139960 A
- JP 3098813 B
- JP 2006085982 A
- JP 2009093923 A
- JP 2002280023 A